# EUROPÄISCHE PATENTSCHRIFT

(11) **EP 4 452 598 B1**
(45) Veröffentlichungstag und Bekanntmachung des Hinweises auf die Patenterteilung: **25.02.2026**
(21) Anmeldenummer: 22847118.1
(22) Anmeldetag: 22.12.2022
(51) Int. Cl.: B29C 48/10, B29C 48/92, B29C 48/40, B29C 48/69, B29C 55/28, B29C 48/25, B29C 48/27, B29C 48/275, B29C 48/285

(54) **BLASFOLIENANLAGE UND VERFAHREN ZUM HERSTELLEN EINER FOLIENBAHN**
BLOWN FILM EXTRUSION PLANT AND PROCESS FOR MANUFACTURING A WEB OF FILM
LIGNE D'EXTRUSION DE FILM SOUFFLÉ ET PROCÉDÉ DE PRODUCTION D'UNE BANDE DE FILM

(30) Priorität: 22.12.2021 DE 102021134416
(43) Veröffentlichungstag der Anmeldung: 30.10.2024
(60) Teilanmeldung: 25225801.7
(73) Patentinhaber: Reifenhäuser GmbH & Co. KG Maschinenfabrik, 53844 Troisdorf (DE)
(72) Erfinder: LETTOWSKY, Christoph, 52074 Aachen (DE); FISCHER, Peter, 53123 Bonn (DE); NENTWIG, Fabian, 53797 Lohmar (DE); NEUSS, Andreas, 67551 Worms (DE)
(74) Vertreter: Meissner Bolte Partnerschaft mbB
(86) Internationale Anmeldenummer: PCT/DE2022/100976
(87) Internationale Veröffentlichungsnummer: WO 2023/116984

(56) Entgegenhaltungen:
- EP-A1- 2 631 060
- EP-A1- 2 631 060
- EP-A1- 2 631 060
- WO-A2-2016/059572
- WO-A2-2016/059572
- WO-A2-2016/059572
- DE-A1- 102006 019 445
- DE-A1- 102006 019 445
- DE-A1- 4 405 552
- DE-A1- 4 405 552
- US-A- 5 122 315
- US-A- 5 122 315
- US-A1- 2013 229 888
- US-A1- 2013 229 888

## Beschreibung

Die Erfindung betrifft eine Blasfolienanlage, eine Verwendung eines Doppleschneckenextruders zum Speisen einer Ringdüse einer Blasfolienanlage und ein Verfahren zum Herstellen einer Folienbahn.

Genauer betrifft die Erfindung eine Blasfolienanlage zum Herstellen einer Folienbahn aus einem Recyclingmaterial, eine Verwendung eines Doppleschneckenextruders zum Speisen einer Ringdüse einer Blasfolienanlage und ein Verfahren zum Herstellen einer Folienbahn aus einem Recyclingmaterial.

Blasfolienanlagen sind in verschiedenen Ausgestaltungen bereits aus dem Stand der Technik bekannt. Die Blasfolienanlagen des Stands der Technik sind insbesondere auch bereits in der Lage eine Folienbahn aus Recyclingmaterial herzustellen. Dabei kann eine Blasfolienanlage gewöhnlich über einen Extruder verfügen, welcher zum Aufschmelzen und Homogenisieren des zu extrudierenden Materials zu einer Schmelze dient. Ferner ist insbesondere bekannt, dass eine Ringdüse zum Extrudieren eines Folienschlauchs vorgesehen ist und die Blasfolienanlage in einem Schmelzestrom zwischen dem Extruder und der Ringdüse über eine Ringdüsenschmelzepumpe zum Fördern der Schmelze zur Ringdüse verfügt. Die Blasfolienanlage kann außerdem über eine Schlauchbildungszone zum Längs- und Querziehen bzw. Längs- und Querstrecken des Folienschlauchs verfügen. Zusätzlich kann bei den Blasfolienanlagen im Stand der Technik auch ein Kühlmittel für den sich in Maschinenrichtung bewegenden Folienschlauch vorgesehen sein und die Blasfolienanlage kann jenseits der Schlauchbildungszone über eine Flachlegung zum Flachlegen des Folienschlauchs zu einer Doppellagenfolienbahn verfügen. Außerdem ist es möglich, dass im Stand der Technik die Blasfolienanlage ein Abzugswalzenpaar jenseits des Kühlmittels zum Abziehen des Folienschlauchs aufweist.

EP 2 631 060 A1 beschreibt eine Blasfolienanlage mit einem Extruder, einer Ringdüsenschmelzepumpe sowie einem Filter im Schmelzestrom.

WO 2016/059572 A2 offenbart Blasfolienanlagen zur Herstellung von Folienbahnen aus Recyclingmaterial, bei denen Filtrationseinrichtungen eingesetzt werden und unterschiedliche Prozessführungen beschrieben sind.

US 5,122,315 A beschreibt ein Extrusionssystem mit Extruder, gravimetrischer Materialzufuhr, einem Getriebepumpenmodul sowie einer Steuerung, die Eingangs- und Ausgangswerte erfasst und die Geschwindigkeit der Pumpe regelt.

US 2013/0229888 A1 offenbart Knet- und Extrusionsanlagen mit mehreren hintereinandergeschalteten Zahnradpumpen sowie einer Steuerung mit Feedback- und Feedforward-Regelung, um Druckschwankungen vor den Pumpen zu vermeiden.

Nachteilhaft bei den bekannten Lösungen ist insbesondere, dass das Material - insbesondere einem Recycling zuzuführende Folien aus der Produktion und oder der Nutzung - zunächst zerkleinert, verschmolzen und pelletiert werden muss, bevor das Material im nächsten Schritt extrudiert werden kann. Dies kann unter anderem zu zusätzlich nötigen Prozessschritten, einer minderen Materialqualität und einem höheren Energieverbrauch führen.

### Aufgabe und Lösung

Es ist daher eine Aufgabe der vorliegenden Erfindung, die voranstehend beschriebenen Nachteile zumindest teilweise zu beheben. Insbesondere ist es Aufgabe der vorliegenden Erfindung schnelle Materialwechsel und Umstellzeiten, eine verbesserte Schmelzequalität mit hohem Rezyklatanteil, eine verbesserte Schichtverteilung, spannungs- und schrumpfarme und/oder -reiche Folien, einen hohen Automatisierungsgrad und/oder eine gute Bedienbarkeit bereitzustellen.

Die voranstehende Aufgabe wird gelöst durch ein Blasfolienanlage mit den Merkmalen des Anspruchs 1 und durch ein Verfahren mit den Merkmalen des Anspruchs 8. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Blasfolienanlage beschrieben sind, selbstverständlich auch im Zusammenhang mit dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Erfindungsgemäß wird eine Blasfolienanlage zum Herstellen einer Folienbahn aus einem Recyclingmaterial vorgeschlagen, welche übereinstimmend mit einer gattungsgemäßen Blasfolienanlage über einen Extruder zum Aufschmelzen und Homogenisieren des Recyclingmaterials zu einer Schmelze und über eine Ringdüse zum Extrudieren eines Folienschlauchs verfügen kann. Ferner weist die Blasfolienanlage insbesondere eine Ringdüsenschmelzepumpe in einer Führung für einen Schmelzestrom zwischen dem Extruder und der Ringdüse zum Fördern der Schmelze zur Ringdüse auf. Vorliegend soll der Schmelzestrom auch als Führung für einen solchen Schmelzestrom verstanden werden, so dass sich die Merkmale nicht zwangsweise auf eine Blasfolienanlage mit einer Schmelze beziehen, sondern sich auch auf eine Blasfolienanlge mit einer Führung für einen Schmelzestrom beziehen.

Außerdem kann vorgesehen sein, dass die Blasfolienanlage über eine Schlauchbildungszone zum Längs- und Querziehen des Folienschlauchs sowie über ein Kühlmittel für den sich in Maschinenrichtung bewegenden Folienschlauch verfügt. Zusätzlich kann die Blasfolienanlage jenseits der Schlauchbildungszone über eine Flachlegung zum Flachlegen des Folienschlauchs zu einer Doppellagenfolienbahn und über ein Abzugswalzenpaarjenseits des Kühlmittels zum Abziehen des Folienschlauchs verfügen.

Es wird ferner vorgeschlagen den Extruder der Blasfolienanlage als Doppelschneckenextruder auszubilden. Der Doppelschneckenextruder ist ein Mehrwellenextruder. In der Kunststofftechnik wird er zur Aufbereitung und Formgebung von Kunststoffschmelzen verwendet. Hierzu wird in diesem Fall das Recyclingmaterial oder eine Materialmischung mit dem Recyclingmaterial mittels zwei rotierender ineinandergreifender Schneckenwellen durch einen beheizten Zylinder gefördert und dabei aufgeschmolzen. Doppelschneckenextruder werden üblicherweise anhand des Achsabstands zwischen den beiden Schneckenwellen und deren Rotationsrichtung in tangierende oder dichtkämmende Gleichdralldoppelschneckenextruder oder in tangierende oder dichtkämmende Gegendralldoppelschneckenextruder unterschieden.

Der Gegendralldoppelschneckenextruder bringt weniger Scherung in das zu extrudierende Material ein und belastet es daher wenig. Der Gegendralldoppelschneckenextruder wird daher bei der Verarbeitung von temperaturempfindlichen Materialien vorzugsweise verwendet. Vorliegend ist der Gleichdralldoppelschneckenextruder, insbesondere der dichtkämmende Gleichdralldoppelschneckenextruder besonders bevorzugt.

In anderen Worten lassen sich Doppelschneckenextruder in die gegenläufige und die gleichläufige Bauform unterteilen. Innerhalb dieser Bauformen wird zwischen kämmenden und nicht kämmenden Schnecken unterschieden. Bei kämmenden Schnecken greifen üblicherweise die Stege der einen Schnecke in die Gänge der anderen Schnecke während bei nicht kämmenden Schnecken sich die Schneckenprofile in axialer Richtung nicht überschneiden. Ein weiteres Unterscheidungsmerkmal ist die Lage der Schnecken zueinander. Dabei wird üblicherweise zwischen parallelen Schnecken und konisch angeordneten Schnecken unterschieden.

Gegenläufig kämmende Doppelschneckenextruder bilden üblicherweise C-förmige, geschlossene Förderkammern aus, welche die Extrusionsmasse unabhängig von ihren tribologischen Eigenschaften durch den Extruder fördern. Diese Art des Stofftransports wird als Zwangsförderung bezeichnet. Die Schnecken drehen sich an der Oberseite - vergleichbar mit einer Zahnradpumpe - auseinander, um den Materialeinzug zu erleichtern. Durch die geschlossenen Förderkammern ist der Massedurchsatz vom Gegendruck im Wesentlichen unabhängig. Im Eingriffsbereich der Schnecken bildet sich eine Kalanderströmung aus, wodurch in den Spalten hohe Scherkräfte auftreten. Diese Kräfte lassen sich für das Dispergieren von Zusatzstoffen ausnutzen. Gegenläufige Doppelschneckenextruder werden vorwiegend zur Verarbeitung von PVC eingesetzt. Schwierigkeiten bei der Verarbeitung von PVC entstehen durch die Neigung zum Wandgleiten und die thermische Empfindlichkeit des Materials. Durch den Einsatz von gegenläufigen Doppelschneckenextrudern wird das Material zwangsgefördert und ein enges Verweilzeitspektrum erreicht. Zum einen wird dadurch dem Wandgleiten entgegengewirkt, zum anderen wird der übermäßige Abbau des Materials durch eine zu lange thermische Belastung verhindert.

Bei konischen Doppelschneckenextrudern sind die Schneckenachsen nicht mehr parallel sondern unter einem Winkel angeordnet, sodass sich der Achsabstand der Schnecken in Richtung Austragszone verringert. Die konische Bauform bietet unter anderem Vorteile einer kürzeren Baulänge bei vergleichbarem Durchsatz, geringerer Scherung im Austragsbereich aufgrund der abnehmenden Schneckenumfangsgeschwindigkeit und der erleichterten Drehmomenteinbringung durch die größeren Achsabstände. Es können drei wesentliche Unterscheidungen getroffen werden. Eine konstante, eine abnehmende oder eine zunehmende Gangtiefe können die Anpassung des benötigten Volumens an die jeweilige Aufgabe ermöglichen.

Doppelschneckenextruder mit gleichlaufenden, kämmenden Schnecken bilden in der Regel keine geschlossenen Förderkammern, sondern stellen ein axial offenes System dar. Es findet demzufolge keine Zwangsförderung statt, sondern die Förderung basiert größtenteils auf der sogenannten Schleppströmung. Die Schnecken rotieren bevorzugt mit gleicher Winkelgeschwindigkeit und gleicher Drehrichtung. Die Extrusionsmasse wird in Kanälen gefördert, welche beide Schnecken wendeiförmig in Form einer Acht umschließen, wobei sich der Querschnitt geometriebedingt im Eingriffsbereich verengt. Ein Teil der Schmelze wird unabhängig von den Haftbedingungen zwangsgefördert; dies geschieht aufgrund der geometrischen Verhältnisse im Eingriffsbereich. An allen Punkten des Eingriffsbereichs gleiten beide Schnecken mit der gleichen Relativgeschwindigkeit dicht aneinander vorbei, dadurch wird die haftende Extrusionsmasse bei einem genügend engen Spiel zwischen den Schnecken abgestreift. Gleichläufige Doppelschneckenextruder stellen auch aufgrund dieses Selbstreinigungseffekts wichtige Aufbereitungsmaschinen dar.

Die gleichläufigen Doppelschneckenextruder finden heute in vielen Industriezweigen ihre Anwendungen. Das Hauptanwendungsgebiet heute (Basis der installierten Maschinen) ist mit großem Abstand die Kunststoffindustrie. Hier kommen gleichläufige Doppelschnecken vorwiegend in der Kunststoffaufbereitung, aber auch zunehmend in der Direktverarbeitung bei der Extrusion und beim Spritzgießen zum Einsatz. Hier zieht man insbesondere Vorteile aus der Einsparung einer weiteren Aufschmelzung (Energieeinsparung, Vermeidung von Schädigung der Polymere durch zweifaches Aufschmelzen) und der durch die Rezepturfreiheit sich ergebenden Flexibilität bei der Einstellung der Materialeigenschaften. Weitere bedeutende Anwendungsfelder für diese Maschinen sind die Kautschuk- und die Lebensmittelindustrie.

Zur Anpassung an eine Vielzahl an Verarbeitungs- und Produktanforderungen können Doppelschneckenextruder im Allgemeinen modular aufgebaut sein. Dies gilt sowohl für den Zylinder wie auch die Schnecken. Die Extruderschnecken bestehen bevorzugt aus Elementen, welche auf eine zentrale Welle geschoben und befestigt werden. Die Vorteile einer solchen Bauart sind unter anderem:
leichte Veränderung der Schneckengeometrie für Versuchsaufbauten beim Anfahren von Anlagen oder bei geänderten Prozessbedingungen, Standardisierung der Schneckenelemente und die Bildung verschiedener und optimierter Verfahrenszonen.

Typische Verfahrenszonen eines Doppelschneckenextruders sind:
- die Einzugszone,
- die Aufschmelzzone,
- die distributive Mischzone,
- die dispersive Mischzone,
- die Entgasungszone und
- die Austragszone.

In der Einzugszone wird dem Extruder üblicherweise der feste Kunststoff zugeführt. Der Feststoff wird anschließend in Richtung der Austragszone gefördert und komprimiert. Eine weitere Aufgabe der Einzugszone besteht bevorzugt im Entfernen von miteingezogener Luft. Die Förderkapazität der Feststoffförderzone ist abhängig vom freien Schneckenvolumen, der Drehzahl und der Schüttdichte des Feststoffs.

Die Zuführung des Kunstoffs zum Doppelschneckenextruder kann dabei über einen Trichter und/oder über einen Side-Feeder erfolgen. In jedem Fall ist bei der Dosierung im Allgemeinen und der Auslegung von Trichtern und/oder Side-Feedern im Besonderen zu berücksichtigen, dass Kunststoffabfälle (Granulat und/oder Fluff) in Folge des geringen Schüttgewichts nur schwer fließfähig sind.

Dies ist im Wesentlichen auf die ungünstige Form und das damit verbundene geringe Schüttgewicht zurückzuführen: Im Falle des Fluffs liegt es in der Natur des Materials selber ("Schnipsel"), im Fall von recyclierten Granulatkörnern an deren ungünstiger Kornform und einer ungleichmäßigen Kornformverteilung. Ohne besondere Maßnahmen kommt es beispielsweise im Trichter oftmals zur Brücken- oder Schachtbildung. Während die Brückenbildung den Massefluss vollständig unterbricht, kommt es bei der Schachtbildung zur Entmischung und zur Bildung von Totzonen beispielsweise im Trichter. Beide Effekte führen daher oftmals zu Produktionsunterbrechungen oder starken Durchsatzschwankungen. Begegnet werden kann diesem Problem in einfachen Fällen durch eine geeignete Trichterwandneigung. Nächster Schritt sind dann bevorzugt sogenannte Einzugseinbauten im Trichter. Führt auch dies nicht zum Erfolg, so kann, mit Rührwerk oder Kompressionsschnecke im Trichter gearbeitet werden. Neben Polymeren in Granulat- oder Fluff-Form können im stromabwärtigen Bereichs eine Doppelschneckenextruders auch pulverförmige oder flüssige Zuschlagstoffe wie z.B. Füllstoffe (CaCo3, TiO2) oder Verarbeitungshilfsstoffe zu geführt werden.

Ein Vorteil des Doppelschneckenextruder ist, dass das Ausgangsmaterial nicht notwendigerweise wie beim Einschnecken-Extruder bevorzugt als Granulat vorliegen sollte sondern auch die Zuführung in Form von Schnitzeln/Schnipseln sogenanntem "Fluff" möglich ist. Zur Erzeugung in die Form "Fluff" muss das Ausgangsmaterial von seiner ursprünglichen Gestalt z.B. in Form von Bahnware (z.B. als Rolle), Randstreifen, Verschnitten oder PCR-Ware nach dem Sortieren (Folie oder Laminat in der Größe DIN A6 bis DIN AO, oder größer), Schmelze-Klumpen, Folien-/Laminat-Fetzen, die zuvor für die nach der Sortierung und der Reinigung in einem ersten Schritt zerkleinert wurden, zerkleinert werden.

Die Zerkleinerung ist als Grundoperation praktisch für alle nachfolgenden Aufbereitungs- und Verwertungsverfahren Voraussetzung, wobei die gewählten Korngrößen an die nachfolgenden Prozesse angepasst sein müssen. Gleichzeitig sollen die Korngrößen nicht kleiner sein als notwendig, da mit der Zerkleinerung hohe Kosten verbunden sind. Außerdem ist neben einer geeigneten Korngröße eine gleichmäßige Korngrößenverteilung und Kornform erforderlich, da andernfalls unterschiedliche geometrische Abmessungen einen großen negativen Einfluss auf eine anschließende Sortierung ausüben.

Für die Zerkleinerungsleistung und den Zerkleinerungserfolg sind die Materialeigenschaften, insbesondere Zähigkeit, Elastizität und Wärmeformbeständigkeit des Aufgabegutes von entscheidender Bedeutung. Die Energieeinleitung ist, auf verschiedene Arten möglich. Jedoch führen bei Thermoplasten Beanspruchungen durch Druck, Scherung und Schlag oft nur zu unzureichenden Ergebnissen. Unter Normalbedingungen werden Druck und Schlag von Kunststoffkörnern zähelastisch abgefangen, während Scherung zum Aufschmelzen der Kunststoffpartikel führt. Daher werden in der großtechnischen Zerkleinerung vor allem die Beanspruchungsarten Schnitt und Prall angewendet.

Beim Schnitt wird das Korn aufgrund einer Scherbeanspruchung im Scherspalt längs der Schneidkante getrennt. Der Unterschied zwischen der Beanspruchungsform Scherung und Schnitt liegt also darin, dass beim Schnitt die Scherung sich lokal sehr begrenzt auf den Scherspalt auswirkt, während sich die Beanspruchungsform Scherung auf das gesamte Korn auswirkt. Daher führt Scherung bei Festkörpern nur zu unzureichenden Zerkleinerungsergebnissen.

Die Zerkleinerung des Korns durch Prall wird durch die Trägheitskräfte erreicht, indem vorhandene kinetische Energie beim Zusammenstoß mit einem oder mehreren Körnern oder durch Aufprall auf einen Festkörper bei hohen Relativgeschwindigkeiten in Verformungsarbeit umgesetzt wird. Der Unterschied zwischen den Beanspruchungen Druck, Schlag und Prall liegt in der Relativgeschwindigkeit derTeilchen zueinander bzw. zwischen Teilchen und Festkörper. Während bei der Beanspruchung Druck Relativgeschwindigkeiten < 5 m/s erzielt werden, betragen diese bei Schlag > 5 m/s. Bei der Zerkleinerung mittels Prall hingegen werden Relativgeschwindigkeiten zwischen 20 m/s und mehreren 100 m/s aufgebracht. Speziell bei der Feinstzerkleinerung werden sehr hohe Relativgeschwindigkeiten aufgebracht. Zur Erzeugung von Fluff zur Speisung eines Doppelschneckenextruder aus den oben genannten Abfällen bietet sich die Zerkleinerung durch Schnitt an.

Zur Zerkleinerung durch Schnitt werden vor allem Schneidwalzenzerkleinerer (auch Rotorschere, Doppelwellenschneider oder Shredder/Schredder genannt) oder seltener Guillotinescheren (auch Spalter genannt) eingesetzt.

Beim Schneidwalzenzerkleinerer wird das zugeführte Material von Reißzähnen, die auf parallellaufenden, gegenläufig rotierenden Wellen angeordnet sind, erfasst und zwischen die Wellen eingezogen. Teilweise durch Schneiden und teilweise durch Zerreißen werden die Abfälle solange zerkleinert bis sie die ineinander kämmenden Walzen nach unten verlassen können.

Neben den Schneidwalzenzerkleinerern werden häufig Schneidmühlen eingesetzt. Diese Mühlen eignen sich für die Zerkleinerung zähelastischer Stoffe hervorragend und können daher für fast alle Kunststoffe eingesetzt werden. Schneidmühlen werden in unterschiedlichen Bauformen eingesetzt, die jedoch alle nach dem gleichen Prinzip arbeiten. Das zu zerkleinernde Gut gelangt durch die Schwerkraft über den Aufgabeschacht in den Einzugsbereich des an dieser Stelle offenen Rotors. Vom Rotor wird das Mahlgut umgewälzt und zwischen Rotor- und Statormessern fortlaufend zerkleinert. Wenn die Partikelgröße einzelner Körner kleiner sind als die Maschenweite des eingesetzten Siebbodens, verlassen sie den Mahlraum durch die Schwerkraft und teilweise durch die Fliehkraft.

Schneidwalzenzerkleinerer können die breite Vielfalt von Folien- und Laminatabfällen besonders gut aufnehmen und zu Fluff zerkleinern und eignen sich daher besonders bevorzugt für die Fluff-Erzeugung in einer Anlage mit einem gegenläufig kämmende Doppelschneckenextruder in der Dirketverarbeitung in der Folien-Extrusion.

Die Aufschmelz- oder Plastifizierzone dient der Umwandlung des Feststoffs in Schmelze, des Weiteren sollen Füllstoffe vordispergiert werden. Abhängig von den nachfolgenden Verfahrenszonen ist es nicht immer notwendig, am Ende der Plastifizierzone einen Aufschmelzgrad von 100 % zu erreichen.

Unaufgeschmolzene Feststoffpartikel können in nachfolgenden Zonen, wie der dispersiven Mischzone, aufgeschmolzen werden. Die Aufgaben der distributiven Mischzone bestehen in der Verteilung von Feststoffen und Fluiden in der Schmelze sowie der Homogenisierung der Massetemperatur. Die Mischwirkung wird durch Aufteilen und Umleiten des Schmelzestroms erzielt. Mischelemente sind im Allgemeinen so ausgelegt, dass die scherintensive Dispersion minimiert wird, was zu einer reduzierten Selbstreinigung führt. In der dispersiven Mischzone sollen Feststoff oder Polymeragglomerate sowie Flüssigkeitstropfen durch hohe Scherkräfte zerteilt werden. Neben der Schubspannung ist für die Zerteilwirkung auch die Dauer der Beanspruchung ausschlaggebend.

Die Entgasungszone dient dem Entfernen von Wasser, Restmonomeren und gelösten Gasen. Um ein Austreten der Schmelze durch die Entgasungsöffnung zu verhindern, muss der Druck der Schmelze zuvor dem Umgebungsdruck angepasst werden. Die Kanäle vor der Entgasungszone müssen vollständig gefüllt sein, um ein Extrahieren von noch nicht eingearbeiteten Komponenten oder das Ansaugen von Luft über den Einfülltrichter zu verhindern. Dies wird durch geeignete Abstauelemente erzielt.

Die Entgasung bietet die Möglichkeit, während des Verarbeitungsprozesses durch Extrusion niedermolekulare Bestandteile, Gase oder Luft aus der Schmelze zu entfernen. Jedoch sind die zu entgasenden Stoffe aufgrund der besonderen Zusammensetzung der Recyclingmaterialien teilweise verschieden.

Entgasungsaufgaben, die beim Recycling von Kunststoffen häufiger auftreten, sind:
- Trocknung: Entzug von Restfeuchtigkeit, wodurch unter Umständen auf eine aufwendige und teuere Vortrocknung des Materials verzichtet werden kann; Blasenbildung und Molekulargewichtsabbau durch Hydrolyse kann unterbunden werden.
- Verschiebung des Gleichgewichts: Werden niedermolekulare Komponenten insbesondere aus Polykondensaten entzogen, so wird das Gleichgewicht in Richtung hochmolekularer Ketten verschoben und es erfolgt ein Molekulargewichtsaufbau.
- Entfernen von äußeren Verschmutzungen: Leichtflüchtige, meist organische Verbindungen, die in Form von Verschmutzungen an den Kunststoffen haften, werden aus der Schmelze entfernt, z.B. Fette, Öle sowie teilweise Druckfarben oder Lacke.
- Entfernen von inneren Verschmutzungen: Stoffe, die während des Gebrauchs des Kunststoffs in das Material eindiffundiert sind und die nicht durch einen Waschprozess entfernt werden können, werden durch Entgasung entfernt, z.B. Benzin, Diesel, Frostschutzmittel.
- Entfernen von niedermolekularen Abbauprodukten: Während der Verarbeitung oder dem Gebrauch freigesetzte Abbauprodukte, die in Form von Kettenbruchstücken, Monomeren oder Oligomeren vorliegen und die Gebrauchs- wie die Verarbeitungseigenschaften des Kunststoffs nachhaltig verschlechtern, werden entfernt.
- Entgasung von Lösemitteln: Lösemittel, die aufgrund von teilweise eingesetzten Reinigungs- und Trennstufen der Aufbereitung ins Material gelangt sind, werden entfernt.

Allerdings werden mit der Entgasung gleichzeitig teilweise auch Stoffe entfernt, die im Material verbleiben sollten. Dies können kurzkettige Polymerbestandteile ebenso wie zugesetzte Additive, insbesondere Stabilisatoren, Antioxidantien, Lichtschutzmittel, Weichmacher usw. sein.

Für die Entgasungsleistung gelten die folgenden Zusammenhänge:
Mit zunehmender Temperatur werden Einflussgrößen wie Viskosität, Dampfdruck, Flüchtigkeit und Diffusionsgleichgewicht positiv beeinflusst und bewirken eine erhöhte Entgasungsleistung.

Mit fallendem Druck in der Entgasungszone steigt die Entgasungsleistung.

Eine große Phasengrenzfläche bei gleichzeitig geringer Schichtdicke begünstigt die Entgasung. Phasengrenzflächen und Schichtdicken sind durch die Abmessungen des Entgasungsapparates vorgegeben. Da die Schichtdicke nicht beliebig dünn ausgeführt werden kann, wird versucht, über ständige Oberflächenerneuerung, d.h. hohe Drehzahlen, die Entgasungsleistung zu steigern. Eine hohe Verweilzeit in der Entgasungszone führt ebenfalls zu einer besseren Entgasungsleistung. Dieser Zusammenhang steht dem Bestreben nach Wirtschaftlichkeit und damit kurzen Verweilzeiten entgegen.

Ein Doppelschneckenextruder mit gleichlaufenden, kämmenden Schnecken wie er in der Direktverarbeitung eingesetzt wird besitzt vorteilhafterweise neben einer sogenannten atmosphärischen Entgasungszone mindestens eine bevorzugt jedoch zwei Entgasungszonen an denen ein Vakuum anliegt. Der Druck in einer solchen Verfahrenszone liegt in jedem Fall unter 1 bar bis hin zu 1 mbar. Typische Drucke liegen zwischen 800 und 10 mbar, bevorzugt zwischen 500 und 50 mbar.

Die Austragszone dient dem Aufbau des erforderlichen Drucks für die nachfolgenden Prozesse.

Bei der Schmelzefiltration von Kunststoffen wird das Material beim Schmelzen durch ein Filterelement geleitet, um Verunreinigungen und andere Feststoffe aus dem Kunststoff zu entfernen. Dabei wird der Kunststoff unter Druck und bei hohen Temperaturen durch ein Filterelement geleitet, das die Feststoffe aus dem Kunststoff herausfiltert. Die Schmelzefiltration ist ein wichtiger Schritt beim Recycling von Kunststoffen, da sie dazu beiträgt, die Qualität des recycelten Materials zu verbessern und möglichst viele Verunreinigungen zu entfernen. Sie wird häufig in Kombination mit anderen Techniken wie der Entgasung eingesetzt, um das recycelte Material so rein wie möglich zu machen.

Unter Filtrieren, Filtern oder Filtration versteht man im Allgemeinen das Abtrennen von festen oder flüssigen Teilchen aus Fluiden mit Hilfe eines Filtermediums. In der Extrusion hat daher die Filtration die Aufgabe, alle Arten von Fremdpartikeln, entsprechend einer gewählten Filterfeinheit, abzuscheiden und damit eine möglichst reine Schmelze zur Verfügung zu stellen.

Diese Problematik stellt sich in verstärktem Maße bei der Verarbeitung von Kunststoffabfällen, die trotz aufwendiger Reinigungsstufen bei der Aufbereitung immer noch in größerem Umfang Verschmutzungen enthalten, als dies bei Kunststoffneuware der Fall ist.

Zur Prozessoptimierung und aus Gründen der Wirtschaftlichkeit sind von einer Schmelzefiltration folgende Forderungen zu erfüllen:
- Filtration bei annähernd konstantem Druck und konstanter Temperatur
- Filterwechsel ohne Unterbrechung und/oder Beeinflussung der Produktion
- Minimale zusätzliche Verweilzeit der Schmelze
- Minimaler Druckabfall in den Filtermedien
- Möglichst hohe Nutzungsdauer der Filter

Aufgrund der teilweise sehr hohen Verschmutzungsgrade bei Kunststoffabfällen stößt man bei den konventionellen Filtrationssystemen für Neuware bzgl. dieser Forderungen jedoch schnell an Grenzen. Bereits eine Fremdkörpermenge von 0,3 Vol.-% wird bereits als für die Filtration sehr große Menge an Verschmutzungen bezeichnet und selbst für ein Siebradfilter, der zu den kontinuierlich arbeitenden Filtersystemen zählt, gilt für wirtschaftliches Arbeiten eine Obergrenze von 0,5 Vol.-% Verschmutzungen.

Typische Filterfeinheiten hängen vom Einsatzgebiet und damit dem verwendeten Schmelzefilter ab. Großflächenfilter werden dann eingesetzt, wenn der Produktionsprozess kontinuierlich läuft, wenig Rezeptur- und Batchwechsel benötigt werden und das Endprodukt eine hohe Reinheit erfordert, also etwa bei Produkten, die glasklar und ohne sichtbare Partikel seien müssen. Häufig erfordert dies Filterfeinheiten unter 50 pm, in Sonderfällen bis unter 5 pm. Siebwechsler dagegen sind für Verfahren mit häufigen Rezept- und/oder Farbwechseln und/oder hohen Kontaminationsmengen (z.B. Recycling) konzipiert. Dabei werden Filterfeinheiten > 50 pm verwendet. Typische Filterfeinheiten bei dem Einsatz von gleichläufigen Doppelschneckenextrudern in der Direktverarbeitung in einer Folien- Extrusionsanlage liegen zwischen 50 pm und 500 pm, bevorzugt zwischen 80 und 200 pm. Geeignete Filterflächen pro Siebe-öffnung) liegen dabei zwischen 10 cm2 bis 1,5 m² bevorzugt zwischen 50 bis 500 cm².

Das komplette Verfahrensteil einer Doppelschnecke (Zylinder und Schnecken) ist in der Regel modular aufgebaut und damit sehr flexibel an die unterschiedlichsten Verfahrensaufgaben anpassbar. Das Verfahrensteil ist in der Regel elektrisch oder auch mit Sattdampf (bei sehr großen Einheiten) beheizt und kann mit Wasser (-Verdampfung) oder Luft gekühlt werden.

Die Schnecken weisen zur Drehmomentübertragung häufig eine modifizierte Verzahnung, Vielkeil- oder Polygongeometrien auf. Wegen der notwendigen Sicherheiten bei der Übertragung der sehr hohen Drehmomente kommen Passfederverbindungen praktisch nicht mehr zur Anwendung.

Die Längen von Schnecken und Zylindern werden bezogen auf den Schneckenaußendurchmesser (L/D) angegeben. Die Nachfrage nach langen Schneckenlängen (L/D) ist aufgrund der Anforderungen bei der Verarbeitung von Polymer-Blends, wie z.B. intensive Misch- und Knetvorgänge, mehrstufiges Zuführen von Zuschlagsstoffen, mehrstufiges Entgasen, etc. in den letzten Jahren gestiegen: Die Schneckenlängen (L/D) beeinflussen die Länge der Zeit für Misch- und Knetvorgängen (dispersives und distributives Mischen), chemischen Reaktionen bei Compoundiervorgängen, etc. Kurz gesagt ein längeres L/D führt zu längerer Verweilzeit. Heute werden Doppelschneckenextruder im Allgemeinen mit Schneckenlängen L/D von 12 und mehr für Laborextruder und von bis zu L/D = 420 für Extruder in der chemischen Industrie eingesetzt. Typische Verhältnisse bei dem Einsatz von gleichläufigen Doppelschneckenextrudern in der Direktverarbeitung in einer Folien- Extrusionsanlage liegen zwischen von L/D = 30-60, bevorzugt zwischen L/D = 40-50.

Übliche Gehäuse sind 3 oder 4 D lang, in einigen Fällen werden aus wirtschaftlichen Gründen auch bis zu 8 D ausgeführt. Gehäuse sind für die unterschiedlichsten Verfahrensaufgaben ausgelegt. Diese Aufgaben entsprechen den typischen Verfahrenszonen und umfassen unter anderem Einzug, Aufschmelzen, Zuführung mit Rückwärtsentlüftung, Einmischen, Entgasen und Austragen/Druckaufbau.

Typische Drehzahlen eines gleichläufigen Doppelschneckenextruders lagen Mitte des vergangenen Jahrhundert nach der der Markteinführung zunächst im Bereich von 100-200 U/min. Heutzutage haben die maximalen Drehzahlen einen Bereich von 600-1500 U/min erreicht und es zeigt sich Jahr für Jahr eine Tendenz zur Erhöhung. Eine hohe Schneckendrehzahl ermöglicht eine Verbesserung des Durchsatzes sowie eine bessere Mischwirkung unter hohen Scherkräften. Als besonderes Beispiel sei eine sehr hohe Schneckendrehzahl von bis zu 2500 U/min genannt, die manchmal verwendet wird, um die Morphologiebildung von Polymerlegierungen zu steuern. Typische Drehzahlen bei dem Einsatz von gleichläufigen Doppelschneckenextrudern in der Direktverarbeitung in einer Folien-Extrusionsanlage liegen zwischen 100 bis 600 U/min, bevorzugt 200 bis 500 U/min.

Für die verfahrenstechnische Auslegung der gleichläufigen Doppelschnecken sind einige geometrische und antriebstechnische Kenngrößen entscheidend:
Das sogenannte Schneckenprofil ergibt sich aus dem Verhältnis von Außendurchmesser Da und Innendurchmesser Di: Da/Di. Der Achsabstand a der beiden Schnecken a ergibt sich dann zu: (Da + Di)/2. In der Praxis wird wegen der notwendigen Spiele ein etwas vergrößerter Achsabstand ausgeführt. Die projizierte Querschnittsfläche der Schnecke, genauer gesagt der beiden Schneckenelemente an einer beliebigen Stelle des Extruders ist stets kleiner als die Querschnittsfläche des achtförmigen Zylinders. Die sich ergebende frei Querschnittsfläche ist neben den dem Außen- und Innendurchmesser eine weitere geometrische Kenngröße eines gleichlaufenden, kämmenden Doppelschneckenextruders. Die freie Querschnittsfläche Afrei vergrößert sich mit zunehmendem Durchmesserverhältnis Da /Di. Dadurch steht mehr freies Volumen im Verfahrensteil für Einzug, Förderung und Entgasung zur Verfügung. Die sogenannte Gangtiefe h errechnet sich zu (Da - Di)/2.

Typische Außendurchmesser eines gleichläufigen Doppelschneckenextruders liegen heute zwischen ca. 12 mm im Fall von Laborextrudern bis hin zu ca. 260 mm bei großen Produktionsanlagen. Typische Außendurchmesser von gleichläufigen Doppelschneckenextrudern bei dem Einsatz in der Direktverarbeitung in einer Folien- Extrusionsanlage liegen zwischen 30 und 180 mm, bevorzugt zwischen 50 mm und 120 mm und besonders bevorzugt zwischen 55 und 95 mm.

Für die möglichen Durchsätze sind außerdem wichtig:
Das spezifische Drehmoment, der Quotient aus dem installierten Drehmoment pro Schneckenwelle Md und dem Achsabstand a in der dritten Potenz: Md /a³ und die Schneckendrehzahl n.

Um einen höheren Durchsatz und eine bessere Mischwirkung des Doppelschneckenextruders zu erzielen, haben das Verhältnis Da/Di und das spezifische Drehmoment seit der Markteinführung des gleichläufigen Doppelschneckenextruders in der Mitte des vergangenen Jahrhundert bis heute stetig zugenommen:
Betrug das Durchmesserverhältnis Da/Di zunächst nur 1,22, so stieg es im Laufe der Jahre über 1,44 hin zu 1,55, dann 1,66 und zuletzt sogar 1,8.

Das spezifische Drehmoment der ersten Generation von gleichläufigen Doppelschneckenextrudern in der Mitte des vergangenen Jahrhunderts betrug nur 3 bis 5 Nm/cm³; typische Werte heute liegen bei 15 bis20 Nm/cm³. Ein höheres spezifisches Drehmoment ermöglicht eine bessere Mischwirkung bei größerem Durchsatz. Und außerdem bedeutet es, dass ein Polymer bei niedrigerer Verarbeitungstemperaturen (d. h. höherer Schmelzviskosität und weniger thermischer Abbau) verarbeitet werden kann.

Bei dem Recyclingmaterial handelt es sich bevorzugt um einen Kunststoff oder eine Mischung aus Kunstoffen, besonders bevorzugt um ein Kunststoff oder eine Mischung aus Kunstoffen aus der Gruppe mit Polymerisaten, Polykondensaten wie Polyethylene (LDPE, LLDPE, mLLDPE, HDPE, MDPE, VLDPE, etc.), Polypropylene (Homo- und Copolymere, Compounds), Plastomere, lonomere, Ethylen-Copolymerisate (EVA, EVOH, EPM/EPDM, EMMA, EAA, EEA, CPE, etc.), Cycloolefin-Copolymere, Polyamide (PA 6, PA 66, PA 6/66, PA 11, etc.), Thermoplastische Elastomere (TPE-E, TPE-O, TPU), Terephtalate ( Polyethylenterephthalat (PET), Polybuthylenterephtalat (PBT)), Polyisobutylen (PIB), Polystyrol PS), biobasierte Kunststoffe und bioabbaubare Kunststoffe (PLA, PHA, TPS, PCL, PBAT, PBS).

Das Recyclingmaterial kann außerdem Additive (Antioxidantien, Antistatika, Farbmittel, Füllstoffe wie CaCCh, TiCh, Gleitmittel, Antiblockmittel, Haftvermittler, usw.) enthalten. Das Recyclingmaterial kann ausdrücklich auch bedruckt oder mit Etiketten etc. beklebt sein. Der Doppelschneckenextruder weist eine besonders gute Mischwirkung auf, wodurch der Verwendete Kunststoff aufbereitet werden kann. Insbesondere ist das Recycling und/oder ein Einmischen von Zuschlagsstoffen mit einem Doppelschneckenextruder besonders vorteilhaft.

Die Blasfolienanlage verfügt erfindungsgemäß über einen Filter mit mindestens einem Filterelement, zum Filtern der Schmelze von einer unfiltrierten Seite zu einer filtrierten Seite. Der Filter dient als Schmutzfängersieb. Bei dem Filter handelt es sich bevorzugt um einen Filter aus der Gruppe mit Schmelzefiltern, Extrudersieben, Filterronden und Strainersieben. Das Filterelement kann hierbei einlagig oder mehrlagig oder plissiert ausgebildet sein. Das Filterelement kann ein Metalldrahtgewebe, Metallfaservlies und/oder gesintertes Gewebelaminat umfassen.

Der Filter ist bevorzugt in dem Schmelzestrom zwischen dem Extruder und der Ringdüse angeordnet. Der Filter kann auch Teil des Extruders sein. Vorzugsweise ist der Filter zwischen dem Extruder und der Ringdüsenschmelzepumpe angeordnet.

Der Filter verfügt erfindungsgemäß über eine Reinigungseinrichtung, welche das Filterelement kontinuierlich und/oder diskontinuierlich erneuert. Vorliegend soll unter dem Begriff erneuert sowohl ein Reinigen eines Filterelements verstanden werden als auch das Einbringen eines neuen Filterelements, welches vorher nicht als Filterelement verwendet wurde oder vor einer erneuten Verwendung gereinigt wurde. Das Einbringen kann dabei manuell wie auch bevorzugt automatisch erfolgen.

Gemäß einer Ausgestaltung ist die Reinigungseinrichtung dazu ausgebildet das Filterelement während des Betriebes der Anlage, also während dem Herstellen einer Folienbahn, zu erneuern. Bei dieser Ausgestaltung muss die Blasfolienanlage also nicht angehalten werden, um das Filterelement zu erneuern.

Gemäß einer Ausgestaltung verfügt die Reinigungseinrichtung über ein drehbares Filterelement oder über ein drehbares Reinigungselement, zur Erneuerung des Filterelements. Das drehbare Filterelement kann sich derart an einem Abstreifelement drehen, so dass herausgefilterter Schmutz von dem Filterelement abgetragen wird. Alternativ kann sich ein Abstreifelement an dem Filterelement drehen, um herausgefilterten Schmutz von dem Filterelement abzutragen. Gemäß einer Ausgestaltung verfügt die Reinigungseinrichtung über ein gegenüber dem Schmelzestrom in dem es im Eingriff ist bewegbares Filterelement oder über ein gegenüber dem Schmelzestrom in dem es im Eingriff ist bewegbares Reinigungselement, zur Erneuerung des Filterelements.

Gemäß einer Ausgestaltung verfügt die Reinigungseinrichtung über eine Umlenkeinrichtung, zum Reinigen des Filterelements, indem die Schmelze zeitweise von derfiltrierten Seite zu der unfiltrierten Seite, also entgegen des üblichen Schmelzestroms geleitet wird. Durch dieses Umlenken des Schmelzestroms wird der herausgefilterte Dreck von dem Filterelement entfernt. Bevorzugt verfügt die Reinigungseinrichtung über einen Reinigungsausgang, durch den die Schmelze, welche von der filtrierten Seite zu der unfiltrierten Seite geleitet wurde, abgegeben wird. Insbesondere ist bevorzugt, dass es sich bei der abzugebenden Schmelze um Schmelze handelt, welche den herausgefilterten Schmutz umfasst.

Gemäß einer Ausgestaltung verfügt die Reinigungseinrichtung über einen Siebwechsler, welcher dazu ausgebildet ist, den Schmelzestrom aufzuteilen und so durch mehrere Filterelemente zu leiten. Der Siebwechsler ist bevorzugt dazu ausgebildet den Schmelzestrom anstatt durch ein erstes und ein zweites Filterelement nur durch eines der Filterelemente zu leiten, so dass das erste Filterelement erneuert werden kann während das zweite Filterelement sich im Schmelzestrom befindet.

Gemäß einer Ausgestaltung ist die Reinigungseinrichtung beziehungsweise der Siebwechsler dazu ausgebildet den Schmelzestrom wahlweise durch einzelne und/oder durch alle verfügbaren Filterelemente zu leiten.

Die Blasfolienanlage verfügt erfindungsgemäß zwischen dem Extruder und der Ringdüsenschmelzepumpe über eine Filterschmelzepumpe, welche die Schmelze zum Filter pumpt. Der Extruder ist derart konzipiert, dass ein Druck im Schmelzestrom aufgebaut wird, um den Fließwiderstand des Extruders zu überwinden. Bei einer Ausgestaltung mit dem Filter reicht der Druck des Extruders oft nicht aus, um den Fließwiederstand am Filter auch zu überwinden. In diesem Fall ist die Filterschmelzepumpe bevorzugt, welche den Fließwiderstand des Filters überwindet.

Die Filterschmelzepumpe ist bevorzugt, damit eine besonders konstante Materialzuführung pro Zeiteinheit und damit eine konstante Materialverarbeitung ermöglicht wird.

Der Doppelschneckenextruder verfügt erfindungsgemäß über mindestens eine Entgasungseinheit, welche eine Extraktion von Verunreinigungen und Kontaminationen ermöglicht. Die Entgasungseinheit kann als Entgasungszone als Teil des Extruders ausgebildet sein. Mit der Entgasungseinheit können flüchtige Bestandteile aus der Schmelze entzogen werden. Um die Entgasung zu verbessern ist es bevorzugt, dass der Füllgrad im Doppelschneckenextruder unter 100 % liegt, insbesondere ist es bevorzugt, dass der Füllgrad unter 80 % liegt. Ein derartiger Füllgrad ist bevorzugt, da ansonsten die Schmelze in Entgasungsstutzen gedrückt werden würde und aus der Entgasungseinheit entweichen würde. Gemäß einer Ausgestaltung verfügt der Doppelschneckenextruder über mindestens eine Entgasungseinheit die als atmosphärische Entgasungseinheit ausgebildet ist. Bei dieser Gestaltung können die flüchtigen Bestandteile aus der Entgasungseinheit ohne ein Anlegen eines Unterdrucks abgegeben werden.

Gemäß einer Ausgestaltung verfügt der Doppelschneckenextruder über mindestens eine Entgasungseinheit die als Unterdruck-Entgasungseinheit ausgebildet ist. Bei dieser Gestaltung wird ein Unterdrück an die Entgasungseinheit angelegt. Der Unterdrück kann von einer Vakuumpumpe entstehen. Diese Gestaltung ermöglicht eine besonders gründliche Entgasung von flüchtigen Bestandteilen. Es ist bevorzugt, dass die Entgasungseinheit, insbesondere die Unterdruck-Entgasungseinheit mit einem Mittel zum Auffangen der flüchtigen Bestandteile, vorzugsweise in Form von Kondensat, verfügt.

Gemäß einer Ausgestaltung verfügt der Extruder über eine Recyclingmaterialzuführung mit einer Stopfschnecke. Durch die Stopfschnecke kann das Recyclingmaterial besonders gleichmäßig dem Extruder zugeführt werden. Die Recyclingmaterialzuführung verfügt bevorzugt über einen Trichter, in welchem die Stopfschnecke angeordnet ist. Die Stopfschnecke ist bevorzugt von einem vom Extruder unabhängigen Antrieb angetrieben. Bevorzugt
Die Blasfolienanlage verfügt erfindungsgemäß über mindestens zwei Drucksensoren zur Erfassung von Drücken innerhalb der Führung für den Schmelzestrom, jeweils in der Führung für den Schmelzestrom am Extruder und vor der Ringdüse. Die Drucksensoren sind dazu ausgebildet im Betrieb der Blasfolienanlage den Schmelzedruck im Schmelzestrom zu erfassen.

. Der erste Drucksensor ist erfindungsgemäß unmittelbar am Extruder angeordnet. Der zweite Drucksensor ist vor der Ringdüsenschmelzepumpe angeordnet. Der Extruder und/oder die Ringdüsenschmelzepumpe und/oder die Recyclingmaterialzuführung können in Abhängigkeit des Schmelzedrucks im Schmelzestrom welcher vom ersten und/oder zweiten Drucksensor am Extruder und/oder vor der Ringdüse erfasst wird reguliert werden.

Gemäß einer Ausgestaltung verfügt die Blasfolienanlage über zwei zusätzliche Drucksensoren zur Erfassung des Schmelzedrucks im Schmelzestrom vor und nach dem Filter. Diese zusätzlichen Drucksensoren sind also Drucksensoren, welche zusätzlich zu den oben genannten Drucksensoren vorhanden sind. Diese Zusätzlichen Drucksensoren können direkt vor und nach dem Filter verbaut sein. Es ist jedoch bevorzugt, dass die zusätzlichen Drucksensoren unmittelbar vor dem Filter und unmittelbar vor der Ringdüse positioniert sind. Bei dieser Gestaltung ist der zweite Drucksensor bevorzugt unmittelbar nach dem Filter positioniert.

Bevorzugt ist der Extruder und/oder die Ringdüsenschmelzepumpe und/oder die Recyclingmaterialzuführung und/oder die Umlenkeinrichtung des Filters und/oder die Filterelementwechselvorrichtung sind in Abhängigkeit des Schmelzedrucks vor und/oder nach dem Filter regulierbar.

Besonders bevorzugt ist der Extruder und/oder die Ringdüsenschmelzepumpe und/oder die Recyclingmaterialzuführung und/oder die Umlenkeinrichtung des Filters werden in Abhängigkeit der Drucksensoren zur Erfassung des Schmelzedrucks im Schmelzestrom am Extruder und vor der Ringdüse und der zusätzlichen Drucksensoren zur Erfassung des Schmelzedrucks im Schmelzestrom vor und nach dem Filter reguliert.

Gemäß einer Ausgestaltung welche nicht unter die Erfindung fällt, verfügt die Blasfolienanlage über ein Lagersilo, zum Vorhalten des Recyclingmaterials.

Gemäß einer Ausgestaltung welche nicht unter die Erfindung fällt, verfügt die Blasfolienanlage über eine Förderschnecke, welche das Recyclingmaterial von dem Lagersilo zu der Recyclingmaterialzuführung fördert. Die Förderschnecke ist bevorzugt horizontal oder im Wesentlichen horizontal angeordnet.

Gemäß einer Ausgestaltung welche nicht unter die Erfindung fällt, verfügt das Lagersilo über ein Mittel zum Durchmischen des Recyclingmaterials innerhalb des Lagersilos. Dies ist bevorzugt, da somit mögliche Verstopfungen von Recyclingmaterials innerhalb des Lagersilos gelöst werden können. Das Mittel zum Durchmischen ist bevorzugt ein Kammsystem innerhalb des Lagersilos, es kann sich dabei aber auch beispielsweise um einen Schüttler handeln, welcher das Lagersilo schüttelt.

Gemäß einer Ausgestaltung welche nicht unter die Erfindung fällt, verfügt das Lagersilo über ein Mittel zum Bestimmen dessen Füllgrades mit dem Recyclingmaterial. Das Mittel zum Bestimmen des Füllgrades kann eine Wiegeeinrichtung des Lagersilos sein. Es ist bevorzugt, dass es sich bei dem Mittel zum Bestimmen des Füllgrades um einen optischen und/oder kapazitiven Sensor handelt.

Gemäß einer Ausgestaltung welche nicht unter die Erfindung fällt, verfügt das Lagersilo über ein Mittel zum Bestimmen dessen Recyclingmaterialverbrauchs. Das Mittel zum Bestimmen des Recyclingmaterialverbrauchs ist bevorzugt eine Wiegeeinrichtung des Lagersilos. Der Recyclingmaterialverbrauch kann so über eine Gewichtsabnahme pro Zeit erfasst werden.

Gemäß einer Ausgestaltung verfügt welche nicht unter die Erfindung fällt, die Blasfolienanlage über ein Vorsilo, zum Befüllen des Recyclingmaterials in das Lagersilo.

Gemäß einer Ausgestaltung welche nicht unter die Erfindung fällt, verfügt die Blasfolienanlage über einen Schredder zum Zerkleinern von einem Ausgangsmaterial. Bei dem Ausgangsmaterial kann es sich um einen Kunststoff oder einer Mischung eines Kunststoffes der oben genannten Gruppe handeln. Das Ausgangsmaterial kann in Form von Bahnware, zerkleinerter Bahnware, geschredderter Folie usw. vorliegen. Die zerkleinerte Bahnware kann in Größen von wenigen mm bis DIN AO und gößer großen Bahnwareteilen vorliegen. Der Schredder ist bevorzugt dazu ausgebildet das Ausgangsmaterial zu dem Recyclingmaterial zu zerkleinern. Das Recyclingmaterial liegt bevorzugt als Fluff vor. Das Recyclingmaterial kann in Form von Flocken vorliegen. Bevorzugt ist die Flockengröße des Recyclingmaterials zwischen 1 mm und 40 mm, besonders bevorzugt ist die Flockengröße des Recyclingmaterials zwischen 5 mm und 12 mm.

Gemäß einer Ausgestaltung welche nicht unter die Erfindung fällt, verfügt die Blasfolienanlage über eine Transporteinrichtung zum Transportieren des Recyclingmaterials vom Schredder zum Lagersilo und/oder dem Vorsilo. Bei einer Gestaltung mit Vorsilo ist es bevorzugt, dass die Transporteinrichtung ausschließlich in das Vorsilo fördert. Bevorzugt ist die Transporteinrichtung als Förderband und/oder als Förderschnecke oder als Druckfördersystem ausgebildet. Besonders bevorzugt ist eine Gestaltung mit einem Förderband mit Förderschnecke, da diese besonders kontinuierlich Material befördern kann.

Gemäß einer Ausgestaltung verfügt die Blasfolienanlage über ein Mischsilo zum Mischen des Recyclingmaterials mit weiteren Materialien. Die Blasfolienanlage kann auch mehrere Mischsilos umfassen. Das oder die Mischsilos können auch als Zwischenlagerfür verschiedene Recyclingmaterialien dienen. Es können auch andere extrudierbare Materialeien neben Recyclingmaterialien in Mischsilos vorgehalten werden. Das Mischsilo verfügt bevorzugt über eine Mischeinrichtung innerhalb des Mischsilos.

Das Mischsilo ist bevorzugt über ein Gebläse und/oder ein Förderband und/oder eine Förderschnecke mit dem Lagersilo und/oder dem Vorsilo verbunden, zum Einbringen des Recyclingmaterials und/oder Mischungen davon.

Gemäß einer Ausgestaltung ist die Recyclingmaterialzuführung dazu ausgebildet neben dem Recyclingmaterial zusätzlich oder ersatzweise ein pelletiertes und/oder granuliertes Material aufzunehmen, um es zum Extruder zu fördern. Bei dem zusätzlichen Material kann es sich neben dem Recyclingmaterial auch um andere extrudierbare Materialien handeln.

Die Blasfolienanlage verfügt bevorzugt über eine Pellet-Dosiereinrichtung zum Vorhalten und Dosieren des pelletierten Materials. Bei dem pelletierten Material handelt es sich bevorzugt um Neuware und/oder höherwertiger Recyclate im Vergleich zu dem Recyclingmaterial.

Gemäß einer Ausgestaltung ist die Blasfolienanlage dazu ausgebildet die Folienbahn neben einer Schicht aus dem Recyclingmaterial mit mindestens einer weiteren Schicht herzustellen. Bevorzugt ist die Blasfolienanlage dazu ausgebildet eine Folienbahn mit 1 bis 11 oder 13 Schichten herzustellen, besonders bevorzugt ist die Blasfolienanlage dazu ausgebildet eine Folienbahn mit 1 bis 5 Schichten herzustellen

Gemäß einer Ausgestaltung verfügt die Blasfolienanlage über mindestens einen zusätzlichen Extruder, welcher das Material zumindest einer zusätzlichen Schicht zu einer Schmelze aufschmelzt und homogenisiert. Bevorzugt handelt es sich bei den zusätzlichen Schichten um einen Kunststoff oder eine Mischung aus Kunstoffen der oben genannten Gruppe.

Bei dem zusätzlichen Extruder kann es sich um einen zusätzlichen Doppelschneckenextruder handeln.

Gemäß einer Ausgestaltung ist die Blasfolienanlage dazu ausgebildet eine Folienbahn herzustellen, bei der das Recyclingmaterial zwischen mindestens zwei weiteren Schichten in der Folienbahn angeordnet ist.

Gemäß einer Ausgestaltung werden zwei oder mehr Schichten von einem einzigen Extruder gebildet. Bei dieser Ausgestaltung ist es nicht zwingend notwendig, dass diese Schichten unmittelbar aufeinander liegen. Gemäß einer Ausgestaltung verfügt die Blasfolienanlage über eine im Wesentlichen vertikal von unten nach oben ausgerichtete Maschinenrichtung.

Von der Erfindung ist ebenfalls die Verwendung eines Doppelschneckenextruders zum Speisen einer Ringdüse einer Blasfolienanlage umfasst. Die Blasfolienanlage ist bevorzugt gemäß einer der oberen Ausführungen ausgebildet.

Die Erfindung betrifft weiterhin ein Verfahren zum Herstellen einer Folienbahn aus einem Recyclingmaterial bevorzugt an einer Blasfolienanlage. Dabei ist vorgesehen, dass ein Doppelschneckenextruder das Recyclingmaterial zu einer Schmelze schmelzt und homogenisiert, anschließend wird die Schmelze über einen Schmelzestrom mit einer Ringdüsenschmelzepumpe zu einer Ringdüse gefördert. Die Schmelze wird über die Ringdüse zu einem Folienschlauch extrudiert und anschließend wird der Folienschlauch an einer Schlauchbildungszone längs- und quergezogen bzw. längs- und quergestreckt. Auf die Schlauchbildungszone folgt eine Flachlegung für den Folienschlauch, welche den Folienschlauch jenseits der Schlauchbildungszone zu einer Doppellagenfolienbahn zusammenlegt. Ein Abzugswalzenpaar jenseits der Flachlegung zum Abziehen des Folienschlauchs.

Der Schmelzestrom wird erfindungsgemäß zusätzlich mittels eines Filters mit mindestens einem Filterelement innerhalb des Schmelzetroms filtriert, indem der Schmelzestrom von einer unfiltrierten Seite zu einer filtrierten Seite geleitet wird. Der Filter ist erfindungsgemäß in dem Schmelzestrom zwischen dem Extruder und der Ringdüse angeordnet, vorzugsweise ist der Filter zwischen dem Extruder und der Ringdüsenschmelzepumpe angeordnet.

Das Filtersystem ist erfindungsgemäß gemäß dem oben beschriebenen Filtersystem der Blasfolienanlage ausgebildet. Es ist erfindungsgemäß eine Filterschmelzepumpe vorgesehen, welche zwischen dem Extruder und der Ringdüsenschmelzepumpe angeordnet ist, welche die Schmelze zum Filter pumpt, bzw. einen Druck innerhalb des Schmelzestroms zum Filtersystem erhöht.

Der Doppelschneckenextruder verfügt erfindungsgemäß zusätzlich über mindestens eine oben beschriebene Entgasungseinheit, welche die Schmelze entgast, wodurch eine Extraktion von Verunreinigungen und Kontaminationen stattfindet.

Gemäß einer Ausgestaltung wird der Extruder über eine Recyclingmaterialzuführung mit einer oben beschriebenen Stopfschnecke mit dem Recyclingmaterial gefüllt.

Erfindungsgemäß erfasst ein Drucksensor den Schmelzedruck im Schmelzestrom am Extruder, und ein weiterer Drucksensor den Schmelzedruck im Schmelzestrom vor der Ringdüse. Eine Steuer- und Regeleinrichung regelt den Extruder und/oder die Ringdüsenschmelzepumpe und/oder die Recyclingmaterialzuführung in Abhängigkeit des Schmelzedrucks im Schmelzestrom am Extruder und/oder vor der Ringdüse. Dies ermöglicht ein konstantes Extrudieren von Recyclingmaterial.

Gemäß einer Ausgestaltung erfasst ein zusätzlicher Drucksensor den Schmelzedruck im Schmelzestrom vor dem Filter, und ein zusätzlicher Drucksensor erfasst den Schmelzedruck im Schmelzestrom nach dem Filter. Der erste Drucksensor erfasst den Schmelzedruck unmittelbar am Extruder. Erfindungsgemäß ist der zweite Drucksensor vor der Ringdüsenschmelzepumpe angeordnet und erfasst dort den Schmelzedruck.

Bevorzugt wird mittels des Drucksensors, der den Schmelzedruck unmittelbar en der Ringdüse erfasst, ein Abschaltdruck überwacht. Der Abschaltdruck soll darüber Aufschluss geben, ob ein Maximaldruck im Schmelzestrom erreicht wird. Dieser Maximaldruck im Schmelzestrom kann erreicht werden, wenn beispielsweise die Temperatur an der Ringdüse zu gering ist und das Recyclingmaterial nicht mehr durch die Ringdüse in der nötigen Menge gefördert werden kann. Der Drucksensor, der unmittelbar an der Ringdüse angeordnet ist, kann zur Regelung der Drehzahl der Ringdüsenschmelzepumpe verwendet werden. Ein weiterer Drucksensor zur Überwachung eines weiteren Abschaltdrucks kann unmittelbar vor dem Filter angeordnet sein. Der Drucksensor, der unmittelbar vor dem Filter angeordnet ist, kann auch eine Regelung der Reinigungseinrichtung aktivieren bzw. deaktivieren. Der Drucksensor, welcher unmittelbar nach dem Extruder angeordnet ist, wird bevorzugt zur Regelung der Extruderdrehzahl verwendet. Der Drucksensor, welcher unmittelbar nach dem Filter angeordnet ist, wird bevorzugt zur Regelung der Drehzahl der Filterschmelzepumpe und/oder der Drehzahl der Ringdüsenschmelzepumpe verwendet.

Gemäß einer Ausgestaltung regelt eine Steuer- und Regeleinrichtung den Extruder und/oder die Ringdüsenschmelzepumpe und/oder die Recyclingmaterialzuführung und/oder die Umlenkeinrichtung des Filters und/oder die Filterelementwechselvorrichtung in Abhängigkeit des Schmelzedrucks im Schmelzestrom vor und/oder nach dem Filter.

regelt die Steuer- und Regeleinrichtung den Extruder und/oder die Ringdüsenschmelzepumpe und/oder die Recyclingmaterialzuführung und/oder die Umlenkeinrichtung des Filters in Abhängigkeit der Drucksensoren zur Erfassung des Schmelzedrucks im Schmelzestrom am Extruder und vor der Ringdüse und der zusätzlichen Drucksensoren zur Erfassung des Schmelzedrucks im Schmelzestrom vor und nach dem Filter.

Im einfachsten Fall wird mittels der Drucksensoren der Druckabfall am Filter erfasst, also der Widerstand, den der Filter innerhalb des Filterstroms hat. Wird ein Schwellenwert überschritten kann die oben beschriebene Reinigungseinrichtung des Filters aktiviert werden, um das Filterelement des Filters zu erneuern.

Gemäß einer Ausgestaltung welche nicht unter die Erfindung fällt, verfügt die Blasfolienanlage über eine Förderschnecke, welche das Recyclingmaterial von einem oben beschriebenen Lagersilo zu der Recyclingmaterialzuführung fördert.

Gemäß einer Ausgestaltung welche nicht unter die Erfindung fällt, fördert die Förderschnecke das Recyclingmaterial von dem Lagersilo in Abhängigkeit des Füllstand des Lagersilos und/oder in Abhängigkeit des Recyclingmaterialverbrauchs und/oder in Abhängigkeit des Schmelzdrucks im Schmelzestrom an mindestens einem der oben beschriebenen Drucksensoren gemäß zu der Recyclingmaterialzuführung des Extruders.

Gemäß einer Ausgestaltung welche nicht unter die Erfindung fällt, wird das Lagersilo in Abhängigkeit von dessen Füllstand mit dem Recyclingmaterial aus dem Vorsilo befüllt. Besonders bevorzugt wird das Lagersilo in Abhängigkeit von dessen Recyclingmaterialverbrauch mit dem Recyclingmaterial aus dem Vorsilo befüllt. Das Lagersilo wird bevorzugt derart befüllt, dass eine Mindestmenge von Recyclingmaterial im Lagersilo nicht unterschritten wird. Dies soll bewirken, dass eine konstate und einheitliche Zuführung des Recyclingmaterials, genauer gesagt des Fluffs, zum Doppelschneckenextruder erfolgt.

Gemäß einer Ausgestaltung welche nicht unter die Erfindung fällt, wird das Recyclingmaterial in einem Mischsilo mit weiteren Materialien gemischt. Das Mischsilo ist zum Einbringen des Recyclingmaterials und/oder Mischungen davon in das Lagersilo bevorzugt über ein Gebläse und/oder ein Förderband und/oder eine Förderschnecke mit dem Lagersilo und/oder dem Vorsilo verbunden. Diese Gestaltung ermöglicht eine besonders konstante Materialzuführung zum Extruder und eine konstante Materialverarbeitung.

Gemäß einer Ausgestaltung welche nicht unter die Erfindung fällt, wird ein Ausgangsmaterial von einem Schredder zu dem Recyclingmaterial geschreddert. Der Schredder ist bevorzugt nach einer oben beschrieben Ausführungsform ausgebildet.

Gemäß einer Ausgestaltung welche nicht unter die Erfindung fällt, transportiert eine Transporteinrichtung das Recyclingmaterial vom Schredder zum Lagersilo und/oder zum Vorsilo über ein Förderband oder ein Druckfördersystem. Wenn die Blasfolienanlage überein Mischsilo verfügt, ist dieses bevorzugt ebenfalls mit geschreddertem Material vom Schredder zu befüllen.

Gemäß einer Ausgestaltung welche nicht unter die Erfindung fällt, wird dem Extruder neben dem Recyclingmaterial zusätzlich oder ersatzweise ein pelletiertes Material, vorzugsweise eine pelletiertes Recyclingmaterial hinzugegeben. Gemäß einer Ausgestaltung wird das pelletierte Material über eine Pellet- Dosiereinrichtung dem Extruder bzw. der Recyclingmaterialzuführung hinzugegeben.

Gemäß einer Ausgestaltung welche nicht unter die Erfindung fällt, wird in Abhängigkeit des Füllstandes des Lagersilos und/oder des Recyclingmaterialverbrauchs und/oder in Abhängigkeit des Schmelzdrucks im Schmelzestrom an einem der oben beschriebenen Drucksensoren dem Extruder neben dem Recyclingmaterial zusätzlich oder ersatzweise das pelletierte Material hinzugegeben.

Gemäß einer Ausgestaltung welche nicht unter die Erfindung fällt, wird die Folienbahn mit dem Recyclingmaterial neben einer Schicht aus dem Recyclingmaterial mit mindestens einer weiteren Schicht eines weiteren Kunststoffes extrudiert.

Gemäß einer Ausgestaltung welche nicht unter die Erfindung fällt, wird das Recyclingmaterial an jeder Flachseite mit mindestens einer weiteren Schicht eines weiteren Kunststoffes extrudiert.

Weitere Vorteile und Aspekte der Erfindung ergeben sich aus den Ansprüchen und aus der nachfolgenden Beschreibung eines bevorzugten Ausführungsbeispiels der Erfindung, welches nachfolgend anhand einer Figur erläutert ist.

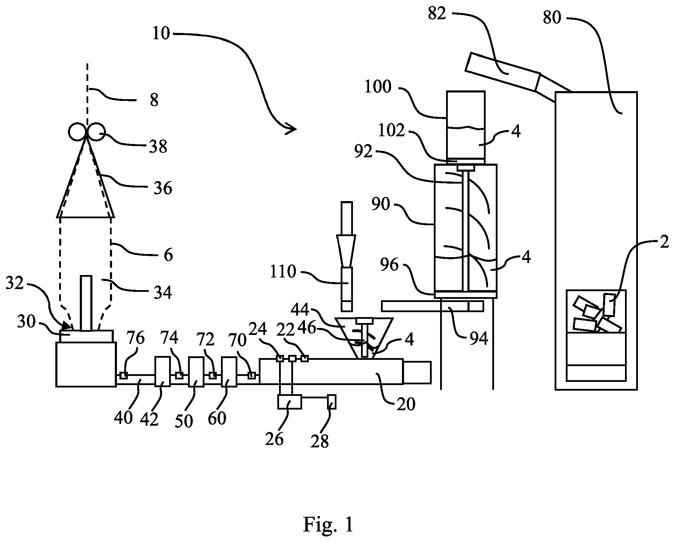

Figur 1 zeigt ausschnittsweise ein schematisches Ausführungsbeispiel einer erfindungsgemäßen Blasfolienanlage.

### Detaillierte Beschreibung des Ausführungsbeispiels

Figur 1 zeigt eine erfindungsgemäße Blasfolienanlage 10, die zum Herstellen einer Folienbahn aus einem Recyclingmaterial 4 vorgesehen ist. Die Blasfolienanlage 10 verfügt über einen Extruder 20, zum Aufschmelzen und Homogenisieren des Recyclingmaterials 4 zu einer Schmelze. Der Extruder 20 ist in diesem Ausführungsbeispiel horizontal am Boden angeordnet.

Der Extruder 20 ist als Doppelschneckenextruder ausgebildet. In diesem Ausführungsbeispiel handelt es sich um einen dichtkämmenden Gleichdralldoppelschneckenextruder.

Bei dem Recyclingmaterial 4 handelt es sich vorliegend um einen Kunststoff aus der Gruppe mit Polymerisaten, Polykondensaten, Polyethylene, Polypropylene, Plastomere, lonomere, Ethylen-Copolymerisate, Cycloolefin-Copolymere, Polyamide, Thermoplastische Elastomere Polyethylenterephthalate, Polyisobutylen, Biobasierte und bioabbaubare Kunststoffe.

Der Extruder 20 ist von einem Elektromotor angetrieben. Der Extruder 20 verfügt In diesem Ausführungsbeispiel sowohl über eine atmosphärische Entgasung als auch eine Unterdruck- Entgasungseinheit 24. Die Unterdruck-Entgasungseinheit 24 ist mit einer Vakuumpumpe 26 wirkverbunden. Die Unterdruck-Entgasungseinheit 24 verfügt über ein Mittel zum Auffangen von Kondensat. Der Extruder 20 verfügt über eine Führung für einen Schmelzestrom 40 zu einer Ringdüse 30 zum Extrudieren eines Folienschlauches 6. Zwischen dem Extruder 20 und der Ringdüse 30 ist eine Ringdüsenschmelzepumpe 42 angeordnet, welche die Schmelze zur Ringdüse 30 fördert. Durch diese Gestaltung muss ein Druck im Schmelzestrom nicht ausschließlich vom Extruder 20 aufgebaut werden, sondern kann durch die Ringdüsenschmelzepumpe 42 aufgebaut, und/oder erhöht werden. Auf die Ringdüse 30 folgt eine Schlauchbildungszone 32 zum längs und quer ziehen des Folienschlauches 6. Die Blasfolienanlage 10 verfügt über ein Kühlmittel 34 für den sich in Maschinenrichtung bewegenden Folienschlauch 6. Bei dem Kühlmittel 34 handelt es sich vorliegend um Luft welche in den Blasfolienschlauch 6 eingeblasen bzw. angeblasen wird. Jenseits der Schlauchbildungszone 32 verfügt die Blasfolienanlage 10 über eine Flachlegung 36 zum Flachlegen 36 des Folienschlauchs 6 zu einer Doppellagenfolienbahn 8. Jenseits dieser Flachlegung 36 ist ein Abzugswalzenpaar 38 angeordnet, welches jenseits des Kühlmittels 34 zum Abziehen des Folienschlauch 6 vorgesehen ist.

In diesem Ausführungsbeispiel verfügt die Blasfolienanlage 10 über einen Filter 50, welcher zwischen der Ringdüsenschmelzepumpe 42 und dem Extruder 20 angeordnet ist. Zwischen dem Filter 50 und dem Extruder 20 ist in diesem Ausführungsbeispiel eine Filterschmelzepumpe 60 angeordnet. Der Extruder 20 verfügt außerdem über eine Recyclingmaterialzuführung 44 mit einer Stopfschnecke 46. Die Stopfschnecke 46 ist von einem Elektromotor angetrieben. In diesem Ausführungsbeispiel verfügt die Blasfolienanlage 10 über einen Schredder 80 in welchen ein Ausgangsmaterial 2 gespeist werden kann welches zu dem Recyclingmaterial 4 zerkleinert wird. Das Ausgangsmaterial 2 kann ein Kunststoff aus der oben genannten Gruppe sein. Das Ausgangsmaterial 2 kann in Form von Bahnware, zerkleinerter Bahnware, geschredderter Folie usw. vorliegen. Der Schredder 80 zerkleinert das Ausgangsmaterial 2 in Flocken zwischen 5 mm und 12 mm Größe. Der Schredder 80 verfügt über eine Transporteinrichtung 82 welche das geschredderte Recyclingmaterial 4 zu einem Vorsilo 100 fördert. Das Vorsilo 100 ist über dem Lagersilo 90 angeordnet und verfügt über eine Dosiereinrichtung 102, über welche das Recyclingmaterial 4 bei Bedarf in das Lagersilo 90 abgegeben werden kann. Die Dosiereinrichtung 102 ist in diesem Ausführungsbeispiel als Schieber ausgebildet. Das Lagersilo 90 verfügt über ein Mittel zum Durchmischen des Recyclingmaterials 92, welches in diesem Ausführungsbeispiel als Rührwerk ausgebildet ist. Von dem Lagersilo 90 wird das Recyclingmaterial 4 über eine Förderschnecke 94 in die Recyclingmaterialzuführung 44 am Extruder 20 geführt.

Das Lagersilo 90 verfügt über Mittel zum Bestimmen des Recyclingmaterialverbrauchs. In diesem Ausführungsbeispiel ist das Mittel zum Bestimmen des Recyclingmaterialverbrauchs als eine Wiegeeinrichtung des Lagersilos 96 ausgebildet. Dadurch kann der Verbrauch des Recyclingmaterials 4 in Gewichteinheit pro Zeiteinheit ermittelt werden. In diesem Ausführungsbeispiel ist das Mittel zum Bestimmen des Füllstandes des Lagersilos 90 von der Wiegeeinrichtung des Lagersilos 96 realisiert. Sobald der Füllstand und damit das Gewicht des Lagersilos 90 unter einen vorbestimmten Wert fällt, wird das Lagersilo 90 mit Recyclingmaterial 4 aus dem Vorsilo 100 gefüllt.

Die Recyclingmaterialzuführung 44 ist dazu ausgebildet neben dem Recyclingmaterial 4 zusätzlich oder ersatzweise ein pelletiertes Recyclingmaterial 4 aufzunehmen, um es zum Extruder 20 zu fördern. Für diesen Zweck verfügt die Blasfolienanlage 10 über eine Pellet- Dosiereinrichtung 110 zum Vorhalten und Dosieren des pelletierten Materials. Bei dem pelletierten Material handelt es sich bevorzugt um Neuware und/oder höherwertiger Recyclate im Vergleich zu dem Recyclingmaterial.

Ein Drucksensor 70 erfasst den Schmelzedruck im Schmelzestrom am Extruder 20, und ein weiterer Drucksensor 76 den Schmelzedruck im Schmelzestrom vor der Ringdüse 30. Eine nicht dargestellte Steuer- und Regeleinrichung regelt den Extruder 20, die Ringdüsenschmelzepumpe 42 und die Recyclingmaterialzuführung 44 in Abhängigkeit des Schmelzedrucks im Schmelzestrom am Extruder 20 und vor der Ringdüse 30. Dies ermöglicht ein konstantes Extrudieren von Recyclingmaterial 4.

Ein zusätzlicher Drucksensor 72 erfasst den Schmelzedruck im Schmelzestrom vor dem Filter 50, und noch ein zusätzlicher Drucksensor 74 erfasst den Schmelzedruck im Schmelzestrom nach dem Filter 50. Der erste Drucksensor 70 erfasst den Schmelzedruck jenseits des Extruders 20. Der zweite Drucksensor 76 erfasst den Schmelzedruck unmittelbar an der Ringdüse 30.

Mittels des Drucksensors 76, der den Schmelzedruck unmittelbar an der Ringdüse 30 erfasst, wird ein Abschaltdruck überwacht. Der Abschaltdruck gibt darüber Aufschluss, ob ein Maximaldruck im Schmelzestrom erreicht ist. Dieser Maximaldruck im Schmelzestrom kann erreicht werden, wenn beispielsweise die Temperatur an der Ringdüse 30 zu gering ist und das Recyclingmaterial 4 nicht mehr durch die Ringdüse 30 in der nötigen Menge gefördert werden kann. Der Drucksensor 76, der unmittelbar an der Ringdüse 30 angeordnet ist, wird zur Regelung der Drehzahl der Ringdüsenschmelzepumpe 42 verwendet. Ein weiterer Drucksensor 72 zur Überwachung eines weiteren Abschaltdrucks ist unmittelbar vor dem Filter 50 angeordnet. Der Drucksensor 72, der unmittelbar vor dem Filter 50 angeordnet ist, wird auch für eine Regelung der Reinigungseinrichtung verwendet. Der Drucksensor 70, welcher unmittelbar nach dem Extruder 20 angeordnet ist, wird zur Regelung der Extruderdrehzahl verwendet. Der Drucksensor 74, welcher unmittelbar nach dem Filter 50 angeordnet ist, wird zur Regelung der Drehzahl der Filterschmelzepumpe 60 und der Drehzahl der Ringdüsenschmelzepumpe 42 verwendet.

### Bezugszeichenliste

2 Ausgangsmaterial
4 Recyclingmaterial
6 Folienschlauch
8 Doppellagenfolienbahn
10 Blasfolienanlage
20 Extruder
22 atmosphärische Entgasungseinheit
24 Unterdruck-Entgasungseinheit
26 Vakuumpumpe
28 Kondensatauffänger
30 Ringdüse
32 Schlauchbildungszone
34 Kühlmittel
36 Flachlegung
38 Abzugswalzenpaar
40 Führung für einen Schmelzestrom
42 Ringdüsenschmelzepumpe
44 Recyclingmaterialzuführung
46 Stopfschnecke
50 Filter
52 Filterelement
60 Filterschmelzepumpe
70 Drucksensor
72 Drucksensor
74 Drucksensor
76 Drucksensor
80 Schredder
82 Transporteinrichtung
90 Lagersilo 92 Mittel zum Durchmischen des Recyclingmaterials
94 Förderschnecke
96 Wiegeeinrichtung des Lagersilos
100 Vorsilo 110 Dosiereinrichtung
110 Pellet-Dosiereinrichtung

## Patentansprüche

1. Blasfolienanlage (10) zum Herstellen einer Folienbahn aus einem Recyclingmaterial (4) mit den folgenden Merkmalen:
a. die Blasfolienanlage (10) verfügt über einen Extruder (20), zum Aufschmelzen und Homogenisieren des Recyclingmaterials (4) zu einer Schmelze,
b. die Blasfolienanlage (10) verfügt über eine Ringdüse (30) zum Extrudieren eines Folienschlauchs (6),
c. die Blasfolienanlage (10) verfügt über eine Führung für einen Schmelzestrom (40) zwischen dem Extruder (20) und der Ringdüse (30) über eine Ringdüsenschmelzepumpe (42), zum Fördern der Schmelze zur Ringdüse (30),
d. die Blasfolienanlage (10) verfügt über eine Schlauchbildungszone (32) zum Längs- und Querziehen des Folienschlauchs (6),
e. die Blasfolienanlage (10) verfügt über ein Kühlmittel (34) für den sich in Maschinenrichtung bewegenden Folienschlauch (6),
f. die Blasfolienanlage (10) verfügt jenseits der Schlauchbildungszone (32) über eine Flachlegung (36) zum Flachlegen des Folienschlauchs (6) zu einer Doppellagenfolienbahn (8),
g. die Blasfolienanlage (10) verfügt über ein Abzugswalzenpaar (38) jenseits des Kühlmittels (34) zum Abziehen des Folienschlauchs (6),
h. der Extruder (20) ist als Doppelschneckenextruder ausgebildet,
i. die Blasfolienanlage (10) verfügt über einen Filter (50) mit mindestens einem Filterelement (52), zum Filtern der Schmelze von einer unfiltrierten Seite zu einer filtrierten Seite,
j. die Blasfolienanlage (10) verfügt über mindestens zwei Drucksensoren (70, 72, 74) zur Erfassung von Drücken innerhalb der Führung für den Schmelzestrom (40), jeweils einen Drucksensor (70) im Schmelzestrom (40) unmittelbar nach dem Extruder (20) und einen Drucksensor (72, 74) vor der Ringdüsenschmelzepumpe (42), und
k. der Filter (50) ist in der Führung für den Schmelzestrom (40) zwischen dem Extruder (20) und der Ringdüse (30) angeordnet, vorzugsweise ist der Filter zwischen dem Extruder (20) und der Ringdüsenschmelzepumpe (42) angeordnet,
l. der Doppelschneckenextruder verfügt über mindestens eine Entgasungseinheit (22), welche eine Extraktion von Verunreinigungen und Kontaminationen ermöglicht,
**gekennzeichnet durch** die weiteren Merkmale:
m. die Blasfolienanlage (10) verfügt zwischen dem Extruder (20) und der Ringdüsenschmelzepumpe (42) über eine Filterschmelzepumpe (60), welche die Schmelze zum Filter (50) pumpt, und
n. der Extruder (20) und die Recyclingmaterialzuführung (44) sind in Abhängigkeit des Schmelzedrucks im Schmelzestrom (40) am Extruder (20) regulierbar und die Ringdüsenschmelzepumpe (42) ist in Abhängigkeit des Schmelzedrucks im Schmelzestrom (40) an der Ringdüsenschmelzepumpe (42) regulierbar, und
o. eine Steuer- und Regeleinrichtung, die dazu eingerichtet ist den Extruder (20) und die Recyclingmaterialzuführung (44) in Abhängigkeit des Schmelzedrucks im Schmelzestrom (40) am Extruder (20) zu regeln und die Ringdüsenschmelzepumpe (42) in Abhängigkeit des Schmelzedrucks im Schmelzestrom (40) an der Ringdüsenschmelzepumpe (42) zu regeln, und
p. der Filter (50) verfügt über eine Reinigungseinrichtung, welche das Filterelement (52) kontinuierlich und/oder diskontinuierlich erneuert.

2. Blasfolienanlage (10) gemäß Anspruch 1 mit mindestens einem der folgenden weiteren Merkmale:
a. die Reinigungseinrichtung ist dazu ausgebildet, das Filterelement (52) während des Betriebes der Anlage, also während dem Herstellen einer Folienbahn, zu erneuern,
b. die Reinigungseinrichtung verfügt über ein drehbares Filterelement (52) oder über ein drehbares Reinigungselement zur Erneuerung des Filterelements (52),
c. die Reinigungseinrichtung verfügt über ein gegenüber dem Schmelzestrom bewegbares Filterelement (52) oder über ein gegenüber dem Schmelzestrom bewegbares Reinigungselement zur Erneuerung des Filterelements (52),
d. die Reinigungseinrichtung verfügt über eine Umlenkeinrichtung zum Reinigen des Filterelements (52), indem die Schmelze zeitweise von der filtrierten Seite zu der unfiltrierten Seite, also entgegen des üblichen Schmelzestroms, geleitet wird,
e. die Reinigungseinrichtung verfügt über einen Reinigungsausgang, durch den die Schmelze, welche von der filtrierten Seite zu der unfiltrierten Seite geleitet wurde, abzugeben,
f. die Reinigungseinrichtung verfügt über einen Siebwechsler, welcher dazu ausgebildet ist, den Schmelzestrom durch mehrere Filterelemente (52) zu leiten,
g. die Reinigungseinrichtung ist dazu ausgebildet, den Schmelzestrom wahlweise durch einzelne und/oder durch alle verfügbaren Filterelemente (52) zu leiten.

3. Blasfolienanlage (10) gemäß einem der vorherigen Ansprüche mit mindestens einem der folgenden weiteren Merkmale:
a. die mindestens eine Entgasungseinheit (22) ist als atmosphärische Entgasungseinheit (22) ausgebildet,
b. die mindestens eine Entgasungseinheit (22) ist als Unterdruck-Entgasungseinheit (24) ausgebildet, wobei die Unterdruck-Entgasungseinheit (24) über ein Mittel zum Auffangen von Kondensat verfügt, welches bei der Unterdruck-Entgasung anfällt.

4. Blasfolienanlage (10) gemäß einem der vorherigen Ansprüche mit dem folgenden weiteren Merkmal:
a. der Extruder (20) verfügt über eine Recyclingmaterialzuführung (44) mit einer Stopfschnecke (46).

5. Blasfolienanlage (10) gemäß einem der vorherigen Ansprüche mit den folgenden weiteren Merkmalen:
a. die Blasfolienanlage (10) verfügt über zwei zusätzliche Drucksensoren (70, 72, 74, 76) zur Erfassung des Schmelzedrucks im Schmelzestrom vor und nach dem Filter (50),
b. der Extruder (20) und/oder die Ringdüsenschmelzepumpe (42) und/oder die Recyclingmaterialzuführung (44) und/oder die Umlenkeinrichtung des Filters (50) und/oder die Filterelementwechselvorrichtung sind in Abhängigkeit des Schmelzedrucks vor und/oder nach dem Filter (50) regulierbar, vorzugsweise mit dem zusätzlichen Merkmal;
c. der Extruder (20) und/oder die Ringdüsenschmelzepumpe (42) und/oder die Recyclingmaterialzuführung (44) und/oder die Umlenkeinrichtung des Filters (50) sind in Abhängigkeit der Drucksensoren (70, 72, 74, 76) zur Erfassung des Schmelzedrucks im Schmelzestrom am Extruder (20) und vor der Ringdüse (30) und der zusätzlichen Drucksensoren (70, 72, 74, 76) zur Erfassung des Schmelzedrucks im Schmelzestrom vor und nach dem Filter (50) regulierbar.

6. Blasfolienanlage (10) gemäß einem der vorherigen Ansprüche mit den folgenden weiteren Merkmalen:
a. die Blasfolienanlage (10) verfügt über mindestens ein Mischsilo zum Mischen des Recyclingmaterials (4) mit weiteren Materialien, vorzugsweise mit dem zusätzlichen Merkmal:
b. das Mischsilo ist über ein Gebläse und/oder ein Förderband und/oder eine Förderschnecke mit dem Lagersilo (90) und/oder dem Vorsilo (100) verbunden, zum Einbringen des Recyclingmaterials (4) und/oder Mischungen davon, wobei
c. die Recyclingmaterialzuführung (44) dazu ausgebildet ist, neben dem Recyclingmaterial (4) zusätzlich oder ersatzweise ein pelletiertes Recyclingmaterial (4) aufzunehmen, um es zum Extruder (20) zu fördern, vorzugsweise mit mindestens einem der zusätzlichen Merkmale:
d. die Blasfolienanlage (10) verfügt über eine Pellet-Dosiereinrichtung (110) zum Vorhalten und Dosieren des pelletierten Materials,
e. bei dem pelletierten Material handelt es sich um Neuware und/oder um höherwertigere Recyclate im Vergleich zu dem Recyclingmaterial, wobei
f. die Pellet-Dosiereinrichtung (110) über eine Förderschnecke verfügt, welche das Recyclingmaterial (4) zum Extruder (20) fördert.

7. Blasfolienanlage (10) gemäß einem der vorherigen Ansprüche mit den folgenden weiteren Merkmalen:
a. die Blasfolienanlage (10) ist dazu ausgebildet, die Folienbahn neben einer Schicht aus dem Recyclingmaterial (4) mit mindestens einer weiteren Schicht herzustellen,
b. die Blasfolienanlage (10) verfügt über mindestens einen zusätzlichen Extruder (20), welcher das Material zumindest einer zusätzlichen Schicht zu einer Schmelze aufschmilzt und homogenisiert, vorzugsweise mit dem zusätzlichen Merkmal:
c. der zusätzliche Extruder ist als Doppelschneckenextruder ausgebildet, wobei.
d. die Blasfolienanlage (10) dazu ausgebildet ist, eine Folienbahn herzustellen, bei der das Recyclingmaterial (4) zwischen mindestens zwei weiteren Schichten in der Folienbahn angeordnet ist, wobei
e. die Blasfolienanlage (10) über eine im Wesentlichen vertikal von unten nach oben ausgerichtete Maschinenrichtung verfügt.

8. Verfahren zum Herstellen einer Folienbahn aus einem Recyclingmaterial (4), unter Verwendung einer Blasfolienanlage nach einem der Ansprüche 1 bis 7, mit den folgenden Merkmalen:
a. der Doppelschneckenextruder schmilzt und homogenisiert das Recyclingmaterial (4) zu einer Schmelze,
b. über den Schmelzestrom mit der Ringdüsenschmelzepumpe (42) wird die Schmelze zur Ringdüse (30) gefördert,
c. die Schmelze wird über die Ringdüse (30) zu einem Folienschlauch (6) extrudiert,
d. an einer Schlauchbildungszone (32) wird der Folienschlauch (6) längs- und quergezogen,
e. die Flachlegung (36) für den Folienschlauch (6) legt den Folienschlauch (6) jenseits der Schlauchbildungszone (32) zu einer Doppellagenfolienbahn (8) zusammen,
f. das Abzugswalzenpaar (38) jenseits der Flachlegung (36) zieht den Folienschlauch (6) ab,
g. der Schmelzestrom wird mittels des Filters (50) mit dem mindestens ein Filterelement (52) innerhalb des Schmelzestroms filtriert, indem der Schmelzestrom von einer unfiltrierten Seite zu einer filtrierten Seite geleitet wird,
h. der Filter (50) ist in dem Schmelzestrom zwischen dem Extruder (20) und der Ringdüse (30) angeordnet, vorzugsweise ist der Filter (50) zwischen dem Extruder (20) und der Ringdüsenschmelzepumpe (42) angeordnet, und
i. die Filterschmelzepumpe (60), welche zwischen dem Extruder (20) und der Ringdüsenschmelzepumpe (42) angeordnet ist, pumpt die Schmelze zum Filter (50), und
j. die Schmelze wird im Doppelschneckenextruder über die mindestens eine Entgasungseinheit (22) entgast, wodurch eine Extraktion von Verunreinigungen und Kontaminationen stattfindet.

9. Verfahren nach vorherigem Anspruch 8 mit dem folgenden weiteren Merkmal:
a. der Extruder (20) wird über eine Recyclingmaterialzuführung (44) mit einer Stopfschnecke (46) mit dem Recyclingmaterial (4) befüllt.

## Claims

1. Blown film plant (10) for producing a film web from a recycled material (4) with the following features:
a. the blown film plant (10) comprises an extruder (20) for melting and homogenizing the recycled material (4) into a melt,
b. the blown film plant (10) comprises an annular die (30) for extruding a film tube (6),
c. the blown film plant (10) comprises a conduit for a melt stream (40) between the extruder (20) and the annular die (30) via an annular die melt pump (42), for conveying the melt to the annular die (30),
d. the blown film plant (10) comprises a tube formation zone (32) for longitudinally and transversely drawing the film tube (6),
e. the blown film plant (10) comprises a cooling medium (34) for the film tube (6) moving in the machine direction,
f. the blown film plant (10) comprises, downstream of the tube formation zone (32), a collapsing unit (36) for collapsing the film tube (6) into a double-layer film web (8),
g. the blown film plant (10) comprises a haul-off roller pair (38) downstream of the cooling medium (34) for hauling off the film tube (6),
h. the extruder (20) is configured as a twin-screw extruder,
i. the blown film plant (10) comprises a filter (50) with at least one filter element (52) for filtering the melt from an unfiltered side to a filtered side,
j. the blown film plant (10) comprises at least two pressure sensors (70, 72, 74) for detecting pressures within the conduit for the melt stream (40), in each case one pressure sensor (70) in the melt stream (40) immediately downstream of the extruder (20) and one pressure sensor (72, 74) upstream of the annular die melt pump (42), and
k. the filter (50) is arranged in the conduit for the melt stream (40) between the extruder (20) and the annular die (30), preferably the filter is arranged between the extruder (20) and the annular die melt pump (42),
l. the twin-screw extruder comprises at least one degassing unit (22) which enables extraction of impurities and contaminations,
**characterized by** the further features:
m. the blown film plant (10) comprises, between the extruder (20) and the annular die melt pump (42), a filter melt pump (60) which pumps the melt to the filter (50), and
n. the extruder (20) and the recycled-material feed (44) are adjustable depending on the melt pressure in the melt stream (40) at the extruder (20), and the annular die melt pump (42) is adjustable depending on the melt pressure in the melt stream (40) at the annular die melt pump (42), and
o. a control and regulating unit configured to regulate the extruder (20) and the recycled-material feed (44) depending on the melt pressure in the melt stream (40) at the extruder (20) and to regulate the annular die melt pump (42) depending on the melt pressure in the melt stream (40) at the annular die melt pump (42), and
p. the filter (50) comprises a cleaning device which renews the filter element (52) continuously and/or discontinuously.

2. Blown film plant (10) according to claim 1 with at least one of the following further features:
a. the cleaning device is configured to renew the filter element (52) during operation of the plant, i.e. during production of a film web,
b. the cleaning device comprises a rotatable filter element (52) or a rotatable cleaning element for renewing the filter element (52),
c. the cleaning device comprises a filter element (52) movable relative to the melt stream or a cleaning element movable relative to the melt stream for renewing the filter element (52),
d. the cleaning device comprises a diversion device for cleaning the filter element (52) by temporarily guiding the melt from the filtered side to the unfiltered side, i.e. counter to the usual direction of the melt stream,
e. the cleaning device comprises a cleaning outlet through which the melt that was guided from the filtered side to the unfiltered side is to be discharged,
f. the cleaning device comprises a screen changer configured to guide the melt stream through a plurality of filter elements (52),
g. the cleaning device is configured to guide the melt stream selectively through individual and/or through all available filter elements (52).

3. Blown film plant (10) according to one of the preceding claims with at least one of the following further features:
a. the at least one degassing unit (22) is configured as an atmospheric degassing unit (22),
b. the at least one degassing unit (22) is configured as a vacuum degassing unit (24), wherein the vacuum degassing unit (24) comprises means for collecting condensate that occurs during vacuum degassing.

4. Blown film plant (10) according to one of the preceding claims with the following further feature:
a. the extruder (20) comprises a recycled-material feed (44) with a stuffing screw (46).

5. Blown film plant (10) according to one of the preceding claims with the following further features:
a. the blown film plant (10) comprises two additional pressure sensors (70, 72, 74, 76) for detecting the melt pressure in the melt stream upstream and downstream of the filter (50),
b. the extruder (20) and/or the annular die melt pump (42) and/or the recycled-material feed (44) and/or the diversion device of the filter (50) and/or the filter element changing device are adjustable depending on the melt pressure upstream and/or downstream of the filter (50),
preferably with the additional feature:
c. the extruder (20) and/or the annular die melt pump (42) and/or the recycled-material feed (44) and/or the diversion device of the filter (50) are adjustable depending on the pressure sensors (70, 72, 74, 76) for detecting the melt pressure in the melt stream at the extruder (20) and upstream of the annular die (30) and the additional pressure sensors (70, 72, 74, 76) for detecting the melt pressure in the melt stream upstream and downstream of the filter (50).

6. Blown film plant (10) according to one of the preceding claims with the following further features:
a. the blown film plant (10) comprises at least one mixing silo for mixing the recycled material (4) with further materials,
preferably with the additional feature:
b. the mixing silo is connected to the storage silo (90) and/or the presilo (100) via a blower and/or a conveyor belt and/or a conveyor screw for introducing the recycled material (4) and/or mixtures thereof, wherein
c. the recycled-material feed (44) is configured to receive, in addition to or alternatively to the recycled material (4), a pelletized recycled material (4) in order to convey it to the extruder (20),
preferably with at least one of the additional features:
d. the blown film plant (10) comprises a pellet metering device (110) for holding and metering the pelletized material,
e. the pelletized material is virgin material and/or higher-grade recyclates compared to the recycled material, wherein
f. the pellet metering device (110) comprises a conveyor screw which conveys the recycled material (4) to the extruder (20).

7. Blown film plant (10) according to one of the preceding claims with the following further features:
a. the blown film plant (10) is configured to produce the film web, in addition to a layer of the recycled material (4), with at least one further layer,
b. the blown film plant (10) comprises at least one additional extruder (20) which melts and homogenizes the material of at least one additional layer into a melt, preferably with the additional feature:
c. the additional extruder is configured as a twin-screw extruder, wherein,
d. the blown film plant (10) is configured to produce a film web in which the recycled material (4) is arranged between at least two further layers in the film web, wherein
e. the blown film plant (10) comprises a machine direction oriented substantially vertically from bottom to top.

8. Method for producing a film web from a recycled material (4), using a blown film plant according to one of claims 1 to 7, with the following features:
a. the twin-screw extruder melts and homogenizes the recycled material (4) into a melt,
b. the melt is conveyed to the annular die (30) via the melt stream with the annular die melt pump (42),
c. the melt is extruded via the annular die (30) into a film tube (6),
d. at a tube formation zone (32) the film tube (6) is longitudinally and transversely drawn,
e. the collapsing unit (36) for the film tube (6) collapses the film tube (6) downstream of the tube formation zone (32) into a double-layer film web (8),
f. the haul-off roller pair (38) downstream of the collapsing unit (36) hauls off the film tube (6),
g. the melt stream is filtered, by means of the filter (50), with the at least one filter element (52) within the melt stream, by guiding the melt stream from an unfiltered side to a filtered side,
h. the filter (50) is arranged in the melt stream between the extruder (20) and the annular die (30), preferably the filter (50) is arranged between the extruder (20) and the annular die melt pump (42), and
i. the filter melt pump (60), which is arranged between the extruder (20) and the annular die melt pump (42), pumps the melt to the filter (50), and
j. the melt is degassed in the twin-screw extruder via the at least one degassing unit (22), whereby extraction of impurities and contaminations takes place.

9. Method according to preceding claim 8 with the following further feature:
a. the extruder (20) is fed with the recycled material (4) via a recycled-material feed (44) with a stuffing screw (46).

## Revendications

1. Installation de film soufflé (10) destinée à produire une bande de film à partir d'une matière recyclée (4), avec les caractéristiques suivantes :
a. l'installation de film soufflé (10) comprend une extrudeuse (20) destinée à fondre et homogénéiser la matière recyclée (4) en une matière fondue,
b. l'installation de film soufflé (10) comprend une filière annulaire (30) destinée à extruder une gaine de film (6),
c. l'installation de film soufflé (10) comprend un conduit pour un flux de matière fondue (40) entre l'extrudeuse (20) et la filière annulaire (30) via une pompe de fusion de filière annulaire (42), destiné à acheminer la matière fondue vers la filière annulaire (30),
d. l'installation de film soufflé (10) comprend une zone de formation de gaine (32) destinée à tirer longitudinalement et transversalement la gaine de film (6),
e. l'installation de film soufflé (10) comprend un fluide de refroidissement (34) pour la gaine de film (6) se déplaçant dans la direction machine,
f. l'installation de film soufflé (10) comprend, en aval de la zone de formation de gaine (32), un dispositif de mise à plat (36) destiné à mettre à plat la gaine de film (6) en une bande de film à double épaisseur (8),
g. l'installation de film soufflé (10) comprend une paire de rouleaux de tirage (38) en aval du fluide de refroidissement (34) destinée à tirer la gaine de film (6),
h. l'extrudeuse (20) est réalisée sous la forme d'une extrudeuse à double vis,
i. l'installation de film soufflé (10) comprend un filtre (50) avec au moins un élément filtrant (52), destiné à filtrer la matière fondue d'un côté non filtré vers un côté filtré,
j. l'installation de film soufflé (10) comprend au moins deux capteurs de pression (70, 72, 74) pour détecter des pressions à l'intérieur du conduit pour le flux de matière fondue (40), à savoir un capteur de pression (70) dans le flux de matière fondue (40) immédiatement en aval de l'extrudeuse (20) et un capteur de pression (72, 74) en amont de la pompe de fusion de filière annulaire (42), et
k. le filtre (50) est disposé dans le conduit pour le flux de matière fondue (40) entre l'extrudeuse (20) et la filière annulaire (30), de préférence le filtre est disposé entre l'extrudeuse (20) et la pompe de fusion de filière annulaire (42),
l. l'extrudeuse à double vis comprend au moins une unité de dégazage (22) qui permet une extraction d'impuretés et de contaminations, **caractérisée par** les caractéristiques supplémentaires suivantes :
m. l'installation de film soufflé (10) comprend, entre l'extrudeuse (20) et la pompe de fusion de filière annulaire (42), une pompe de fusion du filtre (60) qui pompe la matière fondue vers le filtre (50), et
n. l'extrudeuse (20) et l'alimentation en matière recyclée (44) sont réglables en fonction de la pression de la matière fondue dans le flux de matière fondue (40) au niveau de l'extrudeuse (20), et la pompe de fusion de filière annulaire (42) est réglable en fonction de la pression de la matière fondue dans le flux de matière fondue (40) au niveau de la pompe de fusion de filière annulaire (42), et
o. une unité de commande et de régulation configurée pour réguler l'extrudeuse (20) et l'alimentation en matière recyclée (44) en fonction de la pression de la matière fondue dans le flux de matière fondue (40) au niveau de l'extrudeuse (20) et pour réguler la pompe de fusion de filière annulaire (42) en fonction de la pression de la matière fondue dans le flux de matière fondue (40) au niveau de la pompe de fusion de filière annulaire (42), et
p. le filtre (50) comprend un dispositif de nettoyage qui renouvelle l'élément filtrant (52) de manière continue et/ou discontinue.

2. Installation de film soufflé (10) conformément à la revendication 1 avec au moins l'une des caractéristiques supplémentaires suivantes :
a. le dispositif de nettoyage est configuré pour renouveler l'élément filtrant (52) pendant le fonctionnement de l'installation, c'est-à-dire pendant la production d'une bande de film,
b. le dispositif de nettoyage comprend un élément filtrant rotatif (52) ou un élément de nettoyage rotatif pour renouveler l'élément filtrant (52),
c. le dispositif de nettoyage comprend un élément filtrant (52) mobile par rapport au flux de matière fondue ou un élément de nettoyage mobile par rapport au flux de matière fondue pour renouveler l'élément filtrant (52),
d. le dispositif de nettoyage comprend un dispositif de dérivation destiné à nettoyer l'élément filtrant (52) en guidant temporairement la matière fondue du côté filtré vers le côté non filtré, c'est-à-dire à l'encontre du sens habituel du flux de matière fondue,
e. le dispositif de nettoyage comprend une sortie de nettoyage à travers laquelle la matière fondue, qui a été guidée du côté filtré vers le côté non filtré, est à évacuer,
f. le dispositif de nettoyage comprend un changeur de tamis configuré pour guider le flux de matière fondue à travers plusieurs éléments filtrants (52),
g. le dispositif de nettoyage est configuré pour guider le flux de matière fondue sélectivement à travers des éléments filtrants (52) individuels et/ou à travers tous les éléments filtrants (52) disponibles.

3. Installation de film soufflé (10) conformément à l'une des revendications précédentes avec au moins l'une des caractéristiques supplémentaires suivantes :
a. l'au moins une unité de dégazage (22) est réalisée comme unité de dégazage atmosphérique (22),
b. l'au moins une unité de dégazage (22) est réalisée comme unité de dégazage sous vide (24), dans laquelle l'unité de dégazage sous vide (24) comprend un moyen de collecte de condensat qui se forme lors du dégazage sous vide.

4. Installation de film soufflé (10) conformément à l'une des revendications précédentes avec la caractéristique supplémentaire suivante:
a. l'extrudeuse (20) comprend une alimentation en matière recyclée (44) avec une vis de bourrage (46).

5. Installation de film soufflé (10) conformément à l'une des revendications précédentes avec les caractéristiques supplémentaires suivantes :
a. l'installation de film soufflé (10) comprend deux capteurs de pression supplémentaires (70, 72, 74, 76) pour détecter la pression de la matière fondue dans le flux de matière fondue en amont et en aval du filtre (50),
b. l'extrudeuse (20) et/ou la pompe de fusion de filière annulaire (42) et/ou l'alimentation en matière recyclée (44) et/ou le dispositif de dérivation du filtre (50) et/ou le dispositif de remplacement d'élément filtrant sont réglables en fonction de la pression de la matière fondue en amont et/ou en aval du filtre (50), de préférence avec la caractéristique supplémentaire suivante :
c. l'extrudeuse (20) et/ou la pompe de fusion de filière annulaire (42) et/ou l'alimentation en matière recyclée (44) et/ou le dispositif de dérivation du filtre (50) sont réglables en fonction des capteurs de pression (70, 72, 74, 76) pour détecter la pression de la matière fondue dans le flux de matière fondue au niveau de l'extrudeuse (20) et en amont de la filière annulaire (30) et des capteurs de pression supplémentaires (70, 72, 74, 76) pour détecter la pression de la matière fondue dans le flux de matière fondue en amont et en aval du filtre (50).

6. Installation de film soufflé (10) conformément à l'une des revendications précédentes avec les caractéristiques supplémentaires suivantes :
a. l'installation de film soufflé (10) comprend au moins un silo de mélange destiné à mélanger la matière recyclée (4) avec d'autres matériaux,
de préférence avec la caractéristique supplémentaire suivante :
b. le silo de mélange est relié au silo de stockage (90) et/ou au présilo (100) via une soufflante et/ou une bande transporteuse et/ou une vis d'alimentation, pour introduire la matière recyclée (4) et/ou des mélanges de celle-ci, dans lequel
c. l'alimentation en matière recyclée (44) est configurée pour recevoir, en plus de la matière recyclée (4) ou à la place de celle-ci, une matière recyclée (4) pelletisée afin de l'acheminer vers l'extrudeuse (20),
de préférence avec au moins l'une des caractéristiques supplémentaires suivantes :
d. l'installation de film soufflé (10) comprend un dispositif de dosage de pellets (110) destiné à stocker et doser la matière pelletisée,
e. la matière pelletisée est une matière vierge et/ou des recyclats de qualité supérieure par rapport à la matière recyclée, dans lequel
f. le dispositif de dosage de pellets (110) comprend une vis d'alimentation qui achemine la matière recyclée (4) vers l'extrudeuse (20).

7. Installation de film soufflé (10) conformément à l'une des revendications précédentes avec les caractéristiques supplémentaires suivantes :
a. l'installation de film soufflé (10) est configurée pour produire la bande de film, outre une couche de matière recyclée (4), avec au moins une autre couche,
b. l'installation de film soufflé (10) comprend au moins une extrudeuse supplémentaire (20) qui fond et homogénéise le matériau d'au moins une couche supplémentaire en une matière fondue, de préférence avec la caractéristique supplémentaire suivante :
c. l'extrudeuse supplémentaire est réalisée sous la forme d'une extrudeuse à double vis, dans lequel.
d. l'installation de film soufflé (10) est configurée pour produire une bande de film dans laquelle la matière recyclée (4) est disposée entre au moins deux autres couches dans la bande de film, dans lequel
e. l'installation de film soufflé (10) comprend une direction machine orientée essentiellement verticalement de bas en haut.

8. Procédé destiné à produire une bande de film à partir d'une matière recyclée (4), en utilisant une installation de film soufflé selon l'une des revendications 1 à 7, avec les caractéristiques suivantes :
a. l'extrudeuse à double vis fond et homogénéise la matière recyclée (4) en une matière fondue,
b. la matière fondue est acheminée vers la filière annulaire (30) via le flux de matière fondue avec la pompe de fusion de filière annulaire (42),
c. la matière fondue est extrudée via la filière annulaire (30) en une gaine de film (6),
d. à une zone de formation de gaine (32), la gaine de film (6) est tirée longitudinalement et transversalement,
e. le dispositif de mise à plat (36) pour la gaine de film (6) met à plat la gaine de film (6) en aval de la zone de formation de gaine (32) en une bande de film à double épaisseur (8),
f. la paire de rouleaux de tirage (38) en aval du dispositif de mise à plat (36) tire la gaine de film (6),
g. le flux de matière fondue est filtré, au moyen du filtre (50), avec l'au moins un élément filtrant (52) à l'intérieur du flux de matière fondue, en guidant le flux de matière fondue d'un côté non filtré vers un côté filtré,
h. le filtre (50) est disposé dans le flux de matière fondue entre l'extrudeuse (20) et la filière annulaire (30), de préférence le filtre (50) est disposé entre l'extrudeuse (20) et la pompe de fusion de filière annulaire (42), et
i. la pompe de fusion du filtre (60), qui est disposée entre l'extrudeuse (20) et la pompe de fusion de filière annulaire (42), pompe la matière fondue vers le filtre (50), et
j. la matière fondue est dégazée dans l'extrudeuse à double vis via l'au moins une unité de dégazage (22), ce qui entraîne une extraction d'impuretés et de contaminations.

9. Procédé selon la revendication précédente 8 avec la caractéristique supplémentaire suivante :
a. l'extrudeuse (20) est alimentée en matière recyclée (4) via une alimentation en matière recyclée (44) avec une vis de bourrage (46).
